# EUROPEAN PATENT APPLICATION

(11) **EP 4 485 226 A1**
(43) Date of publication of application: **01.01.2025**
(21) Application number: 22936385.8
(22) Date of filing: 08.12.2022
(51) Int. Cl.: G06F 16/29

(54) **DATA COLLECTION METHOD AND APPARATUS**

(30) Priority: 07.04.2022 CN 202210361520
(71) Applicant: Shenzhen Yinwang Intelligent Technologies Co., Ltd., Shenzhen, Guangdong 518129 (CN)
(72) Inventor: FEI, Wenkai, Shenzhen, Guangdong 518129 (CN); JIANG, Yan, Shenzhen, Guangdong 518129 (CN)
(74) Representative: MERH-IP Matias Erny Reichl Hoffmann Patentanwälte PartG mbB
(86) International application number: PCT/CN2022/137576
(87) International publication number: WO 2023/193459

(57) **Abstract**

A data collection method and data collection apparatuses (30 and 40) are provided. The method includes: A first vehicle determines, based on map data collected by the first vehicle, a first region that requires supplementary collection (S101); and sends first supplementary collection information, where the first supplementary collection information indicates that map data of the first region needs to be supplementarily collected (S102). In addition, a second vehicle may adjust a travel path and a speed of the second vehicle and/or control a sensing device of the second vehicle based on the received first supplementary collection information (S103). In a vehicle-vehicle interactive map data collaborative collection manner, collection efficiency or integrity of map data is improved.

## Description

This application claims priority to Chinese Patent Application No. 202210361520.X, filed with the China National Intellectual Property Administration on April 7, 2022 and entitled "DATA COLLECTION METHOD AND APPARATUS", which is incorporated herein by reference in its entirety.

### TECHNICAL FIELD

This application relates to the map field, and in particular, to a data collection method and an apparatus.

### BACKGROUND

With continuous development of autonomous driving technologies, a requirement on a map is increasingly high. For example, a coverage area of the map needs to be wider, data precision of the map needs to be higher, and data freshness of the map needs to be maintained in real time. Consequently, map data collection faces a great challenge.

Generally, a professional collection vehicle collects corresponding map data based on an assigned collection task, and the collected map data is used to make or update the map. However, the current map data collection method has problems such as incomplete collected data and low collection efficiency.

### SUMMARY

This application discloses a data collection method and an apparatus, to improve collection efficiency or integrity of map data.

According to a first aspect, this application provides a data collection method. The method includes: determining, based on map data collected by a first vehicle, a first region that requires supplementary collection; and sending first supplementary collection information, where the first supplementary collection information indicates that map data of the first region needs to be supplementarily collected.

The method may be applied to the first vehicle, or an apparatus, a component, a chip, or the like in the first vehicle, for example, an on board unit (On Board Unit, OBU).

The map data includes but is not limited to point cloud data, RGB image data (or referred to as visible light image data), and depth image data. The first region requires supplementary collection because the first vehicle has not collected the map data of the first region, or because the first vehicle has collected the map data of the first region but precision of the map data is low, for example, the map data is abnormal or image data is blurred.

In the method, when it is determined that there is a region in which map data needs to be supplementarily collected, a vehicle may send supplementary collection information to indicate that the map data of the region needs to be supplementarily collected. In this interactive and collaborative map collection manner, map data collection efficiency can be improved, or integrity of collected map data can be improved.

Optionally, the sending first supplementary collection information includes: broadcasting the first supplementary collection information or sending the first supplementary collection information to a second vehicle, where the second vehicle meets at least one of the following conditions:
a distance between the second vehicle and the first region is less than a distance threshold;
a planned path of the second vehicle passes through the first region; and
time at which the second vehicle arrives at the first region meets a time condition.

The first vehicle broadcasts the first supplementary collection information, so that a plurality of devices can receive the first supplementary collection information. This helps improve map data supplementary collection efficiency of the first region.

Alternatively, the first vehicle may send the first supplementary collection information to a specified object (for example, the second vehicle), so that map data collection efficiency is effectively improved through vehicle-vehicle collaborative interaction, and timeliness of supplementary collection of the map data is ensured.

Based on the foregoing limitation condition on the second vehicle, it can be learned that when the second vehicle may be located in the first region or near the first region, the time at which the second vehicle arrives at the first region meets the time condition. In the two cases, the second vehicle may perform supplementary collection on the map data of the first region in a timely manner, to meet a requirement for the timeliness of the supplementary collection of the map data. That a planned path of the second vehicle passes through the first region indicates that the planned path of the second vehicle has an intersection with the first region, and the second vehicle is about to arrive at the first region, where the second vehicle has a capability of performing supplementary collection on the map data of the first region.

Optionally, the method further includes: receiving second supplementary collection information sent by another vehicle, where the second supplementary collection information indicates that map data of a second region needs to be supplementarily collected; and collecting map data based on the second supplementary collection information.

The first vehicle may not only be used as a sender of the first supplementary collection information, but also be used as a receiver of supplementary collection information.

In an implementation, after receiving the second supplementary collection information, the first vehicle collects map data based on the second supplementary collection information when the first vehicle selects to perform supplementary collection on the map data of the second region. In other words, even if the first vehicle receives the supplementary collection information, the first vehicle has a right to select whether to perform supplementary collection based on the received supplementary collection information.

Optionally, the first supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

The information about the geographic range of the first region may be coordinate values obtained based on any coordinate system, for example, the world geodetic system 1984 (Word Geodetic System 1984, WGS84), a natural coordinate system, or a road coordinate system.

The type information of the sensing device configured to supplementarily collect the map data in the first region is optional information of the first supplementary collection information. The type information of the sensing device indicates a type of the sensing device, and the type of the sensing device includes at least one of a camera, a lidar, a millimeter-wave radar, and an ultrasonic radar. The type information of the sensing device in the first supplementary collection information helps a vehicle receiving the first supplementary collection information quickly determine whether the vehicle has a sensing device of a corresponding type.

The configuration information of the sensing device configured to supplementarily collect the map data in the first region is optional information of the first supplementary collection information. The configuration information of the sensing device indicated by the first supplementary collection information helps a vehicle that wants to perform the supplementary collection determine whether a configuration of a sensing device of the vehicle meets a requirement, or adjust a corresponding configuration of the sensing device of the vehicle in a timely manner.

The information indicating the time for performing the supplementary collection is optional information of the first supplementary collection information. The time information may indicate a moment, or may indicate a time period. This is not specifically limited herein. The time information in the first supplementary collection information helps a receiver of the first supplementary collection information perform supplementary collection on the map data of the first region in a timely manner, to meet a timeliness requirement for performing supplementary collection on the map data of the first region.

The type information of the to-be-supplementarily-collected map data in the first region is optional information of the first supplementary collection information. A type of the to-be-supplementarily-collected map data in the first region may be raw data or processed data. The original data indicates that no processing is performed after the sensing device performs collection. The processing data indicates that the vehicle performs a processing operation, for example, extracting a map element or removing abnormal data, after the sensing device collects the map data. The type information of the map data in the first supplementary collection information helps the vehicle that performs supplementary collection correctly process the collected map data of the first region, to improve accuracy and collection efficiency of the map data.

The information about the to-be-collected map element in the first region is optional information of the first supplementary collection information. The information indicating the to-be-supplementarily-collected map element in the first region is used, so that the vehicle that performs supplementary collection can implement refined collection of the map data of the first region, to improve supplementary collection efficiency and accuracy of the map data.

The map element includes at least one of the following content: a deceleration prompt line, an identification line of a turn waiting region, a gore line, a guide indication line, a stop line, a no parking line, a bus station marking line, a ground number (for example, a speed limit sign), a ground text (for example, "bus"), a ground pattern (for example, a pattern of a motor vehicle), a crosswalk line, a lane line, a road sign (for example, a traffic light sign), and a road fence.

The information about the map element includes at least one of the following content: location information of the map element, collection priority information of the map element, type information of the map element, and identification information of the map element.

The information about the reason why the map data in the first region needs to be supplementarily collected is optional information of the first supplementary collection information. The information about the reason why the map data in the first region needs to be supplementarily collected is used, so that the vehicle that performs supplementary collection can more pertinently supplementarily collect the map data of the first region.

The identification information of the target vehicle is optional information of the first supplementary collection information. The target vehicle is a vehicle that performs the supplementary collection. For example, the target vehicle may be the second vehicle. The identification information of the target vehicle helps the receiver of the first supplementary collection information determines whether the receiver is the target vehicle that performs supplementary collection.

The motion status information of the first vehicle and the identification information of the first vehicle are optional information of the first supplementary collection information.

The motion status information of the first vehicle includes at least one of position information, speed information, course information, acceleration, an angular velocity, a steering wheel angle, predicted track information, and the like of the first vehicle. The motion status information of the first vehicle helps a vehicle that is located behind the first vehicle and that performs supplementary collection to adjust a travel path, a speed, and the like in a timely manner, so as to better perform supplementary collection on the map data of the first region, to improve integrity of the collected map data. The identification information of the first vehicle helps the receiver of the first supplementary collection information accurately know a publisher of a supplementary collection task.

The identification information of the lane in the first region and the identification information of the road in the first region are optional information of the first supplementary collection information. The identification information of the lane in the first region and/or the identification information of the road in the first region enable/enables the receiver of the first supplementary collection information to quickly determine whether the receiver is currently located in the lane and/or the road of the first region.

Optionally, the method further includes: performing at least one of the following operations on a display interface:
marking a region on which the first vehicle has performed collection;
marking the first region that requires supplementary collection; and
marking, by using different colors, the region on which the first vehicle has performed collection and the first region.

The foregoing implementations are implemented, so that the first region on which the first vehicle needs to perform supplementary collection and the region on which collection has been performed can be intuitively displayed on the display interface.

According to a second aspect, this application provides a data collection method. The method includes: receiving first supplementary collection information from a first vehicle, where the first supplementary collection information indicates that map data of a first region needs to be supplementarily collected; and adjusting a travel path and a speed of a second vehicle and/or controlling a sensing device on the second vehicle based on the first supplementary collection information.

The method may be applied to the second vehicle, or an apparatus, a component, a chip, or the like in the second vehicle, for example, an on board unit (On Board Unit, OBU).

The sensing device on the second vehicle includes at least one of a camera, a lidar, a millimeter-wave radar, and an ultrasonic radar.

In the method, the second vehicle may actively determine, based on the first supplementary collection information obtained from the first vehicle, to adjust a travel path and a motion status of the second vehicle, and control the sensing device, so as to better collect the map data of the first region. This not only improves map data collection efficiency, but also improves accuracy of the collected map data.

Optionally, an adjusted travel path of the second vehicle passes through the first region. In this way, a possibility that the second vehicle can perform supplementary collection on the first region is increased.

Optionally, the first supplementary collection information includes information indicating time for performing the supplementary collection. The adjusting a travel path and a speed of a second vehicle and/or controlling a sensing device on the second vehicle based on the first supplementary collection information includes: adjusting the travel path and the speed of the second vehicle and/or controlling the sensing device on the second vehicle based on the time information and a location of the first region.

For example, it is assumed that the first supplementary collection information is specifically "a location of a region 1 and time information: 10:03 AM to 10:08 AM". The second vehicle estimates, based on the current travel path, that time at which the second vehicle arrives at the region 1 is later than 10:08 AM, which does not meet a timeliness requirement for performing supplementary collection on the region 1. In this case, the second vehicle may adjust the travel path and/or the speed of the second vehicle, so that the time at which the second vehicle arrives at the region 1 is within a time range indicated by 10:03 AM to 10:08 AM.

In the foregoing implementation, the requirement for timeliness of supplementary collection is expressed based on the time information, and the second vehicle controls the second vehicle based on the time information, so that a requirement for timeliness of supplementary collection of the map data can be met, and timely supplementary collection of the map data is implemented.

Optionally, the controlling the sensing device on the second vehicle includes at least one of the following content:
turning on a first sensing device on the second vehicle;
turning off the first sensing device on the second vehicle; and
adjust a configuration parameter of the sensing device on the second vehicle.

The configuration parameter of the sensing device includes at least one of the following: a focal length, an angle of view, an aperture, a type of a photosensitive element, and the like of a camera; a line quantity, a maximum recognition distance, beam divergence, a maximum scanning sector, a scanning frequency, a pulse emission frequency, and the like of a lidar; and a detection angle range, angle resolution, angle measurement precision, a maximum detection speed, speed resolution, a maximum working distance, and distance resolution of a millimeter-wave radar.

Optionally, the turning on a first sensing device on the second vehicle includes: turning on the first sensing device at preset time and/or when the second vehicle arrives at a preset location; and the turning off the first sensing device on the second vehicle includes: turning off the first sensing device at preset time and/or when the second vehicle arrives at a preset location.

It can be learned that the second vehicle may be set to control at least one sensing device or a specified sensing device at a specified moment and/or at a specified location. This helps reduce consumption of a resource (for example, electric energy) on the second vehicle.

Optionally, the method further includes: sending feedback information to the first vehicle or a server, where the feedback information indicates that the second vehicle supplementarily collects the map data in the first region.

In other words, the second vehicle notifies, based on the feedback information, the first vehicle or the server that the second vehicle selects to perform a supplementary collection task for the map data of the first region.

Optionally, the feedback information further indicates at least one of the following content:
a region that is in the first region and on which the second vehicle has performed collection;
a region that is in the first region and on which the second vehicle has not performed collection;
a map element that has been collected by the second vehicle in the first region; and
a map element that has not been collected by the second vehicle in the first region.

It can be learned that when performing supplementary collection on the map data of the first region, the second vehicle may supplementarily collect all or some map data of the first region or supplementarily collect all or some map elements of the first region based on an actual situation of the second vehicle. This is not specifically limited herein.

Optionally, the first supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

For details about the content in the first supplementary collection information, refer to related descriptions of the first supplementary collection information in the first aspect.

Optionally, the method further includes: sending second supplementary collection information, where the second supplementary collection information indicates that map data of a second region needs to be supplementarily collected.

In other words, the second vehicle may not only be used as a receiver of the first supplementary collection information, but also be used as a sender of the second supplementary collection information.

Optionally, the method further includes: performing at least one of the following operations on a display interface:
marking, on a map, a supplementary collection path used by the second vehicle to perform supplementary collection;
displaying prompt information on the map, where the prompt information is used to inform a user of a travel cost difference between the supplementary collection path and a pre-generated navigation path;
marking at least a partial region selected by the user in the first region;
marking a region that is in the first region and on which the second vehicle has performed collection; and
displaying information used to inform the user that the second vehicle needs to adjust or has adjusted a sensing device because the second vehicle performs supplementary collection.

The supplementary collection path used by the second vehicle to perform supplementary collection is displayed on the map, and the supplementary collection path is intuitively and clearly displayed to the user.

The pre-generated navigation path may be generated by a network side device (for example, the server) and then sent to the second vehicle, or may be planned by the second vehicle.

The prompt information is displayed on the map, to feed back, to the user, a difference between travel costs of performing the supplementary collection work by the vehicle through the supplementary collection path and travel costs of performing the supplementary collection work by the vehicle through the pre-generated navigation path. Travel costs include at least one of time consumption, travel mileage, fuel consumption, power consumption, a driving environment safety level, a danger level of a path, road toll consumption, and the like. In a crowdsourcing collection scenario, before selecting whether to perform the supplementary collection work, the vehicle may make a correct decision with reference to the prompt information.

In addition, both the supplementary collection path and the pre-generated navigation path may be displayed on the map, and are distinguished by using different colors, to intuitively present a comparison effect or a difference between the supplementary collection path and the pre-generated navigation path.

The user may selectively undertake, based on a situation of the user, supplementary collection of map data in at least a partial region, and the at least partial region selected by the user is displayed, to improve interaction experience of the user.

The region that is in the first region and on which the second vehicle has performed collection is marked, so that the second vehicle can quickly learn a completion status of the supplementary collection work performed by the second vehicle in the first region.

In an implementation, the region that is in the first region and on which the second vehicle has not performed collection, the map element that has been collected by the second vehicle in the first region, and the like may be further marked.

When the second vehicle selects to perform supplementary collection, when the sensing device needs to be adjusted or after the sensing device has been adjusted, the second vehicle may display related information on the display interface to inform the user.

In an implementation, a collection field of view of the second vehicle at a current location may be further presented on the display interface. In this way, it is convenient for the second vehicle to adjust the travel path of the second vehicle, so that the collection field of view at the current location can cover more to-be-supplementarily-collected regions as much as possible.

In an implementation, regions corresponding to different measurement precision in the collection field of view may be further marked by using different colors on the display interface, so that when the second vehicle adjusts a preset path and/or the speed, the to-be-supplementarily-collected region in front of the second vehicle falls within a region with high measurement precision in the current collection field of view as much as possible. This helps improve precision of the collected map data.

According to a third aspect, this application provides a data collection method. The method includes: determining a first region in which map data needs to be supplementarily collected; obtaining vehicle track information, where the vehicle track information includes locations and/or path planning information of a plurality of vehicles; determining a target vehicle from the plurality of vehicles based on a location of the first region and the vehicle track information; and sending supplementary collection information to the target vehicle, where the supplementary collection information indicates that the map data of the first region needs to be supplementarily collected.

The foregoing method may be applied to a network side device. The network side device may be, for example, a server (for example, an application server or a map server) deployed at a network side, or a component or a chip in the server. The network side device may be deployed in a cloud environment, that is, may be a cloud computing server, or the network side device may be deployed in an edge environment, that is, may be an edge computing server. The network side device may be an integrated device, or may be a plurality of distributed devices.

In the foregoing method, the network side device selects, based on the to-be-supplementarily-collected first region, locations, path planning information, capability information, and the like of vehicles, a target vehicle that is suitable for performing supplementary collection on the map data, so that collection efficiency and integrity of the map data can be effectively improved.

Optionally, the determining a first region in which map data needs to be supplementarily collected includes: receiving the supplementary collection information from a first vehicle, where the supplementary collection information indicates that the map data of the first region needs to be supplementarily collected; and determining, based on the supplementary collection information, the first region in which the map data needs to be supplementarily collected.

In the foregoing implementation, the network side device obtains the supplementary collection information by interacting with the vehicle, to obtain the first region in which the map data needs to be supplementarily collected. This provides a possibility for subsequently selecting a target vehicle for performing supplementary collection.

Optionally, the supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of the target vehicle, motion status information of the first vehicle, and identification information of the first vehicle.

For details about the content in the supplementary collection information, refer to related descriptions of the first supplementary collection information in the first aspect.

Optionally, the determining a target vehicle from the plurality of vehicles based on a location of the first region and the vehicle track information includes: determining the target vehicle from the plurality of vehicles based on the location of the first region, the vehicle track information, and reference information, where the reference information includes at least one of the following content: collection precision information of the vehicles, operation cost information of the vehicles, historical participation degrees of the vehicles, vehicle model information of the vehicles, configuration information of sensing devices of the vehicles, identification information of the vehicles, identification information of users who use the vehicles, and the information indicating the time for performing the supplementary collection.

A convenience degree or a road passing degree of performing supplementary collection by a vehicle may be measured based on the vehicle track information. It may be understood that a shorter distance between the vehicle and the first region and/or a planned path of the vehicle passing through the first region indicates a higher convenience degree or a higher road passing degree of performing supplementary collection by the vehicle. A higher convenience degree of performing supplementary collection by the vehicle indicates a higher probability that the vehicle is selected as the target vehicle.

Higher collection precision of a vehicle indicates higher precision of map data collected by the vehicle. Collection precision information of the vehicle is related to configuration information of a sensing device of the vehicle. A better configuration of the sensing device of the vehicle indicates higher collection precision of the vehicle. The higher collection precision of the vehicle indicates a higher probability that the vehicle is selected as the target vehicle.

A historical participation degree of a vehicle may be a quantity of times or a frequency at which the vehicle historically performs supplementary collection on map data based on received supplementary collection information. A higher historical participation degree of the vehicle indicates a higher probability that the vehicle is selected as the target vehicle.

Operation cost information of a vehicle indicates an operation ease degree of the vehicle travelling from a current location to the first region. Higher operation costs of a vehicle indicate a higher probability that the vehicle is selected as the target vehicle.

Optionally, the operation cost information of the vehicle may be represented as a quantity of operations that need to be performed by the vehicle to travel from the current location to the first region. A smaller quantity of operations indicates lower operation costs of the vehicle. For example, a vehicle A needs to change lanes twice and turn left once when travelling from a current location to the first region, and a vehicle B needs to change a lane once when travelling from a current location to the first region. A quantity of operations of the vehicle B is less than a quantity of operations of the vehicle A. Therefore, operation costs of the vehicle B are less than operation costs of the vehicle A.

Vehicles of different vehicle models have different driving control complexities, and may also have different operation costs. For example, control of a small-sized vehicle is more flexible than control of medium- and large-sized vehicles. Therefore, operation costs of the small-sized vehicle are lower than operation costs of the medium- and large-sized vehicles.

A vehicle with a higher autonomous driving degree is not only sensitive to control, but also more acceptable to a driving operation, and operation costs of the vehicle are lower. For example, operation costs of a vehicle with a fully autonomous driving function are lower than operation costs of a vehicle with a highly autonomous driving function, and the operation costs of the vehicle with the highly autonomous driving function are lower than operation costs of a vehicle with a conditionally autonomous driving function. For example, operation costs of an unmanned vehicle are lower than operation costs of a vehicle that is driven by a person.

The identification information of the vehicle helps the network side device determine whether the vehicle is registered. The registered vehicle is a vehicle with high credibility.

The identification information of the user who uses the vehicle helps the network side device determine whether the user is a credit blacklist user or a sensitive user that is forbidden to enter a to-be-supplementarily-collected region.

The information indicating the time for performing supplementary collection imposes a requirement on timeliness of performing supplementary collection. This helps ensure data freshness of the map data of the first region that is obtained through supplementary collection.

According to a fourth aspect, this application provides a data collection apparatus. The apparatus includes: a processing unit, configured to determine, based on map data collected by a first vehicle, a first region that requires supplementary collection; and a sending unit, configured to send first supplementary collection information, where the first supplementary collection information indicates that map data of the first region needs to be supplementarily collected.

Optionally, the sending unit is specifically configured to broadcast the first supplementary collection information or send the first supplementary collection information to a second vehicle, where the second vehicle meets at least one of the following conditions:
a distance between the second vehicle and the first region is less than a distance threshold;
a planned path of the second vehicle passes through the first region; and
time at which the second vehicle arrives at the first region meets a time condition.

Optionally, the apparatus further includes: a receiving unit, configured to receive second supplementary collection information sent by another vehicle, where the second supplementary collection information indicates that map data of a second region needs to be supplementarily collected. The processing unit is further configured to collect map data based on the second supplementary collection information.

In an implementation, the processing unit is specifically configured to: collect map data based on the second supplementary collection information when the first vehicle selects to perform supplementary collection on the map data of the second region.

Optionally, the first supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

Optionally, the apparatus further includes a display unit, configured to perform at least one of the following operations:
marking a region on which the first vehicle has performed collection;
marking the first region that requires supplementary collection; and
marking, by using different colors, the region on which the first vehicle has performed collection and the first region.

According to a fifth aspect, this application provides a data collection apparatus. The apparatus includes: a receiving unit, configured to receive first supplementary collection information from a first vehicle, where the first supplementary collection information indicates that map data of a first region needs to be supplementarily collected; and a processing unit, configured to adjust a travel path and a speed of a second vehicle and/or control a sensing device on the second vehicle based on the first supplementary collection information.

Optionally, an adjusted travel path of the second vehicle passes through the first region.

Optionally, the first supplementary collection information includes information indicating time for performing the supplementary collection, and the processing unit is specifically configured to: adjust the travel path and the speed of the second vehicle and/or control the sensing device on the second vehicle based on the time information and a location of the first region.

Optionally, the processing unit is specifically configured to:
turning on a first sensing device on the second vehicle;
turning off the first sensing device on the second vehicle; and
adjusting a configuration parameter of the first sensing device on the second vehicle.

Optionally, the processing unit includes a first processing unit and a second processing unit.

The first processing unit is configured to turn on the first sensing device at preset time and/or when the second vehicle arrives at a preset location.

The second processing unit is configured to turn off the first sensing device at preset time and/or when the second vehicle arrives at a preset location.

Optionally, the apparatus further includes: a sending unit, configured to send feedback information to the first vehicle or a server, where the feedback information indicates that the second vehicle supplementarily collects the map data in the first region.

Optionally, the feedback information further indicates at least one of the following content:
a region that is in the first region and on which the second vehicle has performed collection;
a region that is in the first region and on which the second vehicle has not performed collection;
a map element that has been collected by the second vehicle in the first region; and
a map element that has not been collected by the second vehicle in the first region.

Optionally, the first supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

Optionally, the sending unit is further configured to send second supplementary collection information, where the second supplementary collection information indicates that map data of a second region needs to be supplementarily collected.

Optionally, the apparatus further includes a display unit, configured to perform at least one of the following operations:
marking, on a map, a supplementary collection path used by the second vehicle to perform the supplementary collection;
displaying prompt information on the map, where the prompt information is used to inform a user of a travel cost difference between the supplementary collection path and a pre-generated navigation path;
marking at least a partial region selected by the user in the first region;
marking a region that is in the first region and on which the second vehicle has performed collection; and
displaying information used to inform the user that the second vehicle needs to adjust or has adjusted a sensing device because the second vehicle performs the supplementary collection.

In an implementation, the display unit is further configured to perform at least one of the following operations: marking the region that is in the first region and on which the second vehicle has not performed collection and the map element that has been collected by the second vehicle in the first region; marking a collection field of view of the second vehicle at a current location; and marking, by using different colors, regions corresponding to different measurement precision in the collection field of view.

According to a sixth aspect, this application provides a collection indication apparatus. The apparatus includes: an obtaining unit, configured to determine a first region in which map data needs to be supplementarily collected, where the obtaining unit is further configured to obtain vehicle track information, where the vehicle track information includes locations and/or path planning information of a plurality of vehicles; a processing unit, configured to determine a target vehicle from the plurality of vehicles based on a location of the first region and the vehicle track information; and a sending unit, configured to send supplementary collection information to the target vehicle, where the supplementary collection information indicates that the map data of the first region needs to be supplementarily collected.

Optionally, the obtaining unit is specifically configured to receive the supplementary collection information from a first vehicle, where the supplementary collection information indicates that the map data of the first region needs to be supplementarily collected.

Optionally, the supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of the target vehicle, motion status information of the first vehicle, and identification information of the first vehicle.

Optionally, the processing unit is specifically configured to determine the target vehicle from the plurality of vehicles based on the location of the first region, the vehicle track information, and reference information, where the reference information includes at least one of the following content: collection precision information of the vehicles, operation cost information of the vehicles, historical participation degrees of the vehicles, vehicle model information of the vehicles, configuration information of sensing devices of the vehicles, identification information of the vehicles, identification information of users who use the vehicles, and the information indicating the time for performing the supplementary collection.

According to a seventh aspect, this application provides an apparatus. The apparatus includes a processor and a memory, the memory is configured to store program instructions, and the processor invokes the program instructions in the memory, so that the apparatus performs the method according to any one of the first aspect or the possible implementations of the first aspect.

According to an eighth aspect, this application provides an apparatus. The apparatus includes a processor and a memory, the memory is configured to store program instructions, and the processor invokes the program instructions in the memory, so that the apparatus performs the method according to any one of the second aspect or the possible implementations of the second aspect.

According to a ninth aspect, this application provides an apparatus. The apparatus includes a processor and a memory, the memory is configured to store program instructions, and the processor invokes the program instructions in the memory, so that the apparatus performs the method according to any one of the third aspect or the possible implementations of the third aspect.

According to a tenth aspect, this application provides a computer-readable storage medium, including computer instructions. When the computer instructions are run by a processor, the method according to any one of the first aspect or the possible implementations of the first aspect is implemented.

According to an eleventh aspect, this application provides a computer-readable storage medium, including computer instructions. When the computer instructions are run by a processor, the method according to any one of the second aspect or the possible implementations of the second aspect is implemented.

According to a twelfth aspect, this application provides a computer-readable storage medium, including computer instructions. When the computer instructions are run by a processor, the method according to any one of the third aspect or the possible implementations of the third aspect is implemented.

According to a thirteenth aspect, this application provides a computer program product. When the computer program product is executed by a processor, the method according to any one of the first aspect or the possible implementations of the first aspect is implemented. For example, the computer program product may be a software installation package. When the method provided in any possible design of the first aspect needs to be used, the computer program product may be downloaded and executed on the processor, to implement the method according to any one of the first aspect or the possible embodiments of the first aspect.

According to a fourteenth aspect, this application provides a computer program product. When the computer program product is executed by a processor, the method according to any one of the second aspect or the possible embodiments of the second aspect is implemented. For example, the computer program product may be a software installation package. When the method provided in any possible design of the second aspect needs to be used, the computer program product may be downloaded and executed on the processor, to implement the method according to any one of the second aspect or the possible embodiments of the second aspect.

According to a fifteenth aspect, this application provides a computer program product. When the computer program product is executed by a processor, the method according to any one of the third aspect or the possible embodiments of the third aspect is implemented. For example, the computer program product may be a software installation package. When the method provided in any possible design of the third aspect needs to be used, the computer program product may be downloaded and executed on the processor, to implement the method according to any one of the third aspect or the possible embodiments of the third aspect.

According to a sixteenth aspect, this application provides a vehicle. The vehicle includes the data collection apparatus according to any one of the fourth aspect or the possible implementations of the fourth aspect, includes the data collection apparatus according to any one of the fifth aspect or the possible implementations of the fifth aspect, includes the apparatus according to any one of the seventh aspect or the possible implementations of the seventh aspect, or includes the apparatus according to any one of the eighth aspect or the possible implementations of the eighth aspect.

According to a seventeenth aspect, this application provides a system. The system includes a first data collection apparatus and a second data collection apparatus, or includes a first data collection apparatus and a first collection indication apparatus. The first data collection apparatus is configured to perform the data collection method according to any one of the first aspect or the possible implementations of the first aspect, the second data collection apparatus is configured to perform the data collection method according to any one of the second aspect or the possible implementations of the second aspect, and the first collection indication apparatus is configured to perform the data collection method according to any one of the third aspect or the possible implementations of the third aspect.

### BRIEF DESCRIPTION OF DRAWINGS

FIG. 1 is a diagram of an application scenario according to an embodiment of this application;
FIG. 2 is a diagram of an architecture of a system according to an embodiment of this application;
FIG. 3 is a flowchart of a data collection method according to an embodiment of this application;
FIG. 4 is a diagram of a display interface according to an embodiment of this application;
FIG. 5A is a diagram of another display interface according to an embodiment of this application;
FIG. 5B is a diagram of another display interface according to an embodiment of this application;
FIG. 6 is a flowchart of another data collection method according to an embodiment of this application;
FIG. 7 is a flowchart of another data collection method according to an embodiment of this application;
FIG. 8 is a flowchart of another data collection method according to an embodiment of this application;
FIG. 9 is a diagram of a structure of a data collection apparatus according to an embodiment of this application;
FIG. 10 is a diagram of a structure of a data collection apparatus according to an embodiment of this application;
FIG. 11 is a diagram of a structure of a collection indication apparatus according to an embodiment of this application; and
FIG. 12 is a diagram of a structure of a communication apparatus according to an embodiment of this application.

### DESCRIPTION OF EMBODIMENTS

The terms used in embodiments of this application are merely for the purpose of describing specific embodiments, and are not intended to limit this application. In this specification and the claims in embodiments of this application, terms such as "first", "second", and the like are intended to distinguish between different objects but do not indicate a particular order.

It should be noted that prefix words such as "first" and "second" are used in this application only to distinguish between different described objects, and have no limitation on locations, an order, priorities, a quantity, content, or the like of the described objects. For example, if the described objects are "fields", ordinal numbers before "field" in a "first field" and a "second field" do not limit locations or an order of the "fields", and "first" and "second" do not limit whether "field" modified by "first" and "field" modified by "second" are in a same message, and do not limit an order of the "first field" and the "second field". For another example, if the described objects are "levels", ordinal numbers before "level" in a "first level" and a "second level" do not limit priorities of "levels". For another example, a quantity of described objects is not limited by a prefix word, and may be one or more. A "first device" is used as an example. A quantity of "devices" may be one or more. In addition, objects modified by different prefix words may be the same or different. For example, if a described object is "devices", a "first device" and a "second device" may be a same device, devices of a same type, or devices of different types. For another example, if a described object is "information", "first information" and "second information" may be information of same content or information of different content. In a word, a use of the prefix word used to distinguish described objects in embodiments of this application does not constitute a limitation on the described objects. For descriptions of the described objects, refer to the context descriptions in claims or embodiments, and a use of such a prefix word should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

For ease of understanding, the following first describes related terms that may be used in embodiments of this application.

### (1) Fleet collection

The fleet collection is a manner of collecting map data. Generally, map data in corresponding regions is collected in sequence by a pre-arranged vehicle platoon based on a planned route of each vehicle. A region on which collection is performed by a fleet is a continuous large-area geographical region, for example, a road or all roads in a map tile.

### (2) Crowdsourcing update collection

The crowdsourcing update collection is a local collection mode of map data. The crowdsourcing update collection is mainly used to supplement and update existing maps. Generally, a cloud delivers a collection task to a social vehicle that has an environment sensing capability, and the social vehicle may selectively undertake the corresponding collection task based on a situation of the social vehicle. A to-be-collected region indicated by the collection task is a region on which collection has not been performed or a region in which map data needs to be updated. The to-be-collected region indicated by the collection task is generally a single small-area geographic region, for example, an interval segment on a road or a local region on a lane.

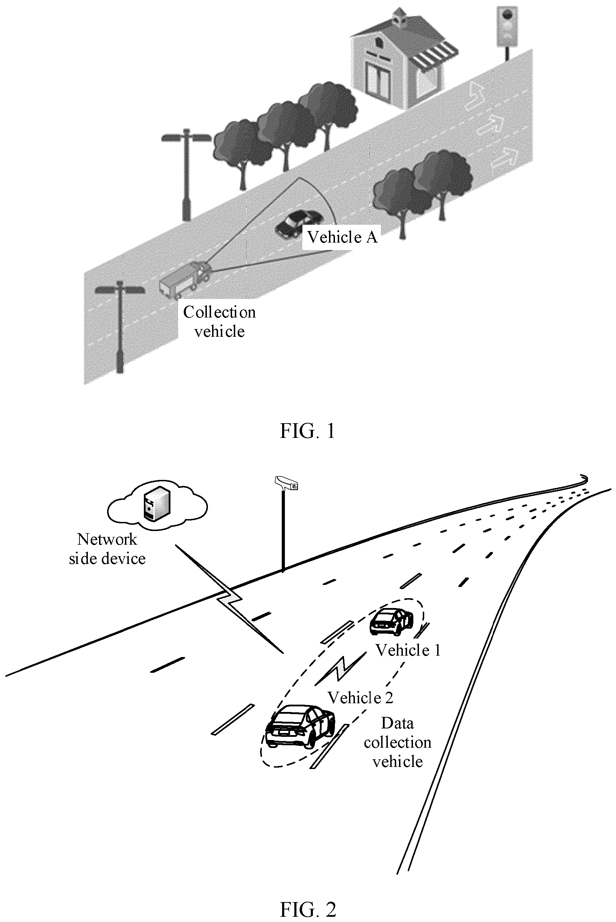

Refer to FIG. 1. FIG. 1 is a diagram of an application scenario. In FIG. 1, a cloud pre-plans a preset path for a collection vehicle, and the collection vehicle travels along the preset path to collect map data of a middle straight lane shown in FIG. 1. The collection vehicle determines, based on the collected map data, that a region (for example, a region 1) requires supplementary collection. A reason for supplementary collection may be that a moving object (for example, a vehicle A) in front of the collection vehicle blocks a map element (for example, a lane line or a ground steering arrow identifier), and consequently map data in the region 1 has not been collected, or the collection vehicle finds that precision of the map data collected in the region 1 does not meet a requirement, resulting in incomplete map data collected by the collection vehicle and low collection efficiency.

For the foregoing problem, an embodiment of this application provides a data collection method, to implement complete collection of map data, and improve map data collection efficiency and accuracy.

The following describes technical solutions of this application with reference to accompanying drawings.

Refer to FIG. 2. FIG. 2 is a diagram of an architecture of a system according to an embodiment of this application. The system is used to collect map data efficiently. As shown in FIG. 2, the system includes a data collection vehicle and a network side device. The data collection vehicle and the network side device may communicate with each other in a wireless manner.

The network side device is a device having a computing function, for example, may be a server (for example, an application server or a map server) deployed at a network side, or may be a component or a chip in the server. The network side device may be deployed in a cloud environment, that is, may be a cloud computing server, or the network side device may be deployed in an edge environment, that is, may be an edge computing server. The network side device may be an integrated device, or may be a plurality of distributed devices. This is not specifically limited in embodiments of this application.

The data collection vehicle may be, for example, a vehicle having an environment sensing capability, a decision-making and planning capability, and a communication capability, or may be an apparatus, a component, or a chip in a vehicle, for example, an on board unit (On Board Unit, OBU). This is not specifically limited in embodiments of this application. A sensing device on the vehicle includes at least one of a vehicle-mounted camera, a millimeter-wave radar, a lidar, and the like.

The data collection vehicle includes at least one vehicle, for example, a vehicle 1 and a vehicle 2 in FIG. 2. In addition to communicating with the network side device, the vehicle 1 and the vehicle 2 may communicate with each other in a wireless manner. The data collection vehicle may be a dedicated vehicle configured to collect map data, or may be a social vehicle that selectively collects map data. This is not specifically limited herein.

In an implementation, the data collection vehicle is a vehicle in a professional collection fleet, and the data collection vehicle includes, for example, the vehicle 1 and the vehicle 2. For example, the vehicle 1 obtains, based on collected map data, a first region that requires supplementary collection, and the vehicle 1 sends first supplementary collection information to the vehicle 2. The first supplementary collection information indicates that map data of the first region needs to be supplementarily collected. In some possible embodiments, the vehicle 1 may alternatively broadcast the first supplementary collection information. This is not specifically limited herein. Correspondingly, the vehicle 2 receives the first supplementary collection information from the vehicle 1, and adjusts a travel path and a speed of the vehicle 2 and/or controls a sensing device on the vehicle 2 based on the first supplementary collection information.

In another implementation, the data collection vehicle is a social vehicle. The network side device determines a first region in which map data needs to be supplementarily collected; obtains vehicle track information, where the vehicle track information includes locations and/or path planning information of a plurality of vehicles; determines a data collection vehicle from the plurality of vehicles based on a location of the first region and the vehicle track information; and sends supplementary collection information to the data collection vehicle, where the supplementary collection information indicates that the map data of the first region needs to be supplementarily collected.

When the data collection vehicle sends the first supplementary collection information, the data collection vehicle may send the first supplementary collection information to another vehicle through a wireless network, for example, a cellular communication network; or the data collection vehicle may send the first supplementary collection information to a roadside device, and the roadside device forwards the first supplementary collection information to another vehicle. Forwarding may be performed through V2X (Vehicle to Everything, Vehicle to Everything). For example, the data collection vehicle may send the first supplementary collection information to the another vehicle through a cellular communication network including a base station. Alternatively, the first supplementary collection information may be forwarded by the roadside device to the another vehicle through V2X communication.

In the foregoing system, a cellular communication technology, for example, 2G cellular communication like a global system for mobile communication (global system for mobile communication, GSM) and a general packet radio service (general packet radio service, GPRS), 3G cellular communication like wideband code division multiple access (wideband code division multiple access, WCDMA), time division-synchronous code division multiple access (time division-synchronous code division multiple access, TS-SCDMA), and code division multiple access (code division multiple access, CDMA), 4G cellular communication like long term evolution (long term evolution, LTE), 5G cellular communication, or another evolved cellular communication technology, may be used for communication between the network side device and a vehicle, and between vehicles. A wireless communication system may alternatively communicate with a wireless local area network (wireless local area network, WLAN) by using a non-cellular communication technology, for example, Wi-Fi. In some embodiments, communication between the foregoing devices may alternatively be performed directly through an infrared link, Bluetooth, or ZigBee. In some embodiments, the foregoing devices may further communicate with each other according to another wireless protocol, for example, various vehicle communication systems. For example, the systems may include one or more dedicated short range communication (dedicated short range communication, DSRC) devices. These devices may include public and/or private data communication between vehicles and/or roadside stations. This is not specifically limited in this application.

It should be noted that FIG. 2 is merely an example of an architectural diagram, but a quantity of network elements included in the system shown in FIG. 2 is not limited. Although not shown in FIG. 2, another functional entity may further be included in FIG. 2 in addition to the function entities shown in FIG. 2. In addition, the method provided in embodiments of this application may be applied to the communication system shown in FIG. 2. Certainly, the method provided in embodiments of this application may also be applied to another communication system. This is not limited in embodiments of this application.

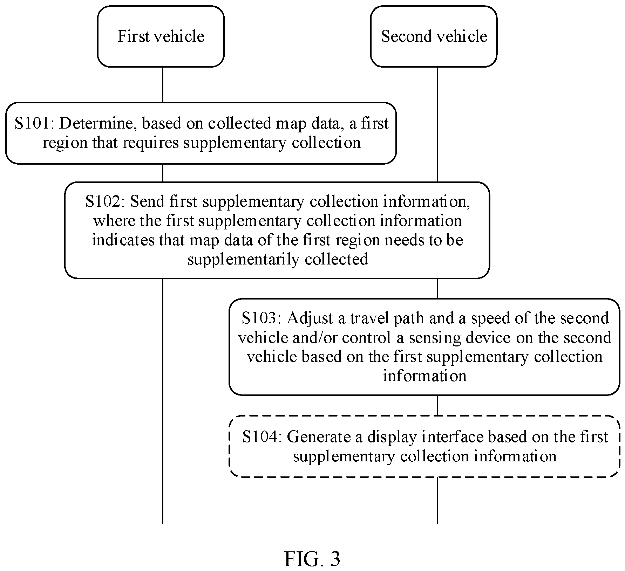

Refer to FIG. 3. FIG. 3 is a flowchart of a data collection method according to an embodiment of this application. The method is applied to a system including a first vehicle and a second vehicle. The method includes but is not limited to the following steps.

S101: The first vehicle determines, based on collected map data, a first region that requires supplementary collection.

The first region includes a geographical region in which the first vehicle has not collected map data, or the first region may include a geographical region corresponding to low-precision map data collected by the first vehicle, or the first region may include a geographical region in which the first vehicle has not collected map data and a geographical region corresponding to low-precision map data. This is not specifically limited herein.

A reason why the first region requires supplementary collection includes at least one of the following: Collection fails to be performed on the first region due to blocking of a moving object; collection fails to be performed on the first region due to a limitation of a collection field of view of the first vehicle; precision of the collected map data of the first region is low; and collected map data of an image type of the first region is blurred.

The moving object may be a vehicle, a pedestrian, an animal, or the like around the first vehicle. That the moving object blocks the first region means that the moving object blocks a map element in the first region. The map element includes at least one of the following content: a deceleration prompt line, an identification line of a turn waiting region, a gore line, a guide indication line, a stop line, a no parking line, a bus station marking line, a ground number (for example, a speed limit sign), a ground text (for example, "bus"), a ground pattern (for example, a pattern of a motor vehicle), a crosswalk line, a lane line, a road sign (for example, a traffic light sign), and a road fence.

The collection field of view of the first vehicle is related to configuration information of a sensing device of the first vehicle, and the configuration information of the sensing device includes but is not limited to at least one of parameters such as a quantity of vehicle-mounted cameras, a lens focal length of a vehicle-mounted camera, and a line quantity of a lidar. The configuration information of the sensing device on the first vehicle may be pre-stored by a vendor in the first vehicle, or may be set by a user, or may be sent by a network side device to the first vehicle.

In embodiments of this application, the map data collected by the first vehicle includes at least one of information such as point cloud data, an RGB image, and a depth image.

S 102: The first vehicle sends first supplementary collection information, where the first supplementary collection information indicates that the map data of the first region needs to be supplementarily collected.

In an implementation, that the first vehicle sends first supplementary collection information includes: The first vehicle broadcasts the first supplementary collection information. In other words, a communication device located in a specific geographical range around the first vehicle may receive the first supplementary collection information, so that map data may be selectively collected based on the first supplementary collection information.

In an implementation, that the first vehicle sends first supplementary collection information includes: The first vehicle sends the first supplementary collection information to the second vehicle.

The second vehicle meets at least one of the following conditions:
(1) a distance between the second vehicle and the first region is less than a distance threshold;
(2) a planned path of the second vehicle passes through the first region; and
(3) time at which the second vehicle arrives at the first region meets a time condition.

That a distance between the second vehicle and the first region is less than a distance threshold may be understood as follows: The second vehicle is located in the first region, or the second vehicle is located near the first region.

That a planned path of the second vehicle passes through the first region means that the planned path of the second vehicle has an intersection with the first region, and the second vehicle is about to arrive at the first region.

The time at which the second vehicle arrives at the first region meets the time condition. For example, the time condition may indicate information about a time range for performing supplementary collection on the first region. In other words, the time at which the second vehicle arrives at the first region meets a timeliness requirement.

It can be learned that when the second vehicle meets the at least one of the foregoing conditions, the second vehicle has a capability of performing supplementary collection on the map data of the first region, that is, meets a supplementary collection mechanism of the map data.

In embodiments of this application, the first supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of the target vehicle, motion status information of the first vehicle, and identification information of the first vehicle.

In a specific implementation, the first supplementary collection information includes the information indicating the geographical range of the first region. The information about the geographic range of the first region may be coordinate values obtained based on any coordinate system, for example, corresponding three-dimensional coordinates including longitude, latitude, and altitude in the world geodetic system 1984 (Word Geodetic System 1984, WGS84), or three-dimensional coordinates including an X coordinate, a Y coordinate, and a Z coordinate in a natural coordinate system, or three-dimensional coordinates including an S coordinate, a D coordinate, and an H coordinate in a road coordinate system, or coordinates in another coordinate system.

The geographical range of the first region is specifically represented in the following plurality of manners. In a representation manner, when the first region is in a regular shape, the first region may be represented by using one or more parameters relative to a reference point (for example, a start point of a lane or a road), such as a distance and coordinates. For example, the first region may be represented at a road level. To be specific, the first region is located on a road on a map, and the reference point is a start point of the road. (a, b) is an interval representation of a road segment on which the first region is located. Alternatively, the first region is represented by using geographical coordinates of two endpoints of the road segment. In another representation manner, the first region may alternatively be represented at a lane level. To be specific, the first region is represented based on at least one lane in a map. In another representation manner, when the first region is in an irregular shape, the first region may be represented by using geographical coordinates of a plurality of corner points of the irregular shape, or a minimum circumscribed rectangle or a minimum circumscribed circle of the first region is used for geometric location representation.

In a specific implementation, the first supplementary collection information further includes the type information of the sensing device configured to supplementarily collect the map data in the first region. The type information of the sensing device configured to supplementarily collect the map data in the first region is optional information of the first supplementary collection information.

The type information of the sensing device indicates a type of the sensing device, and the type of the sensing device includes at least one of a camera, a lidar, a millimeter-wave radar, and an ultrasonic radar. The camera may be further classified as a digital camera and an analog camera based on a signal conversion principle, and may be classified as a visible light camera and an infrared camera based on a purpose of the camera. In some possible embodiments, the camera may alternatively be classified based on a focal length, an aperture, or whether the camera can be scaled. This is not specifically limited herein. In some possible embodiments, the type of the sensing device further includes a GPS, an inertia unit, a wheel speedometer, and the like. The type information of the sensing device indicated by the first supplementary collection information helps a receiver of the first supplementary collection information quickly determine whether the receiver has a sensing device of a corresponding type.

For example, the type information of the sensing device may indicate the type of the sensing device by using bit mapping, a binary value, or another manner. For example, when the type information of the sensing device is a first value, it indicates that the type of the sensing device is a camera; when the type information of the sensing device is a second value, it indicates that the type of the sensing device is a lidar; when the type information of the sensing device is a third value, it indicates that the type of the sensing device is a millimeter-wave radar; when the type information of the sensing device is a fourth value, it indicates that the type of the sensing device is an ultrasonic radar; when the type information of the sensing device is a fifth value, it indicates that the type of the sensing device is a camera and a lidar; or when the type information of the sensing device is a sixth value, it indicates that the type of the sensing device is a camera and a millimeter-wave radar. This is not specifically limited herein.

In a specific implementation, the first supplementary collection information further includes the configuration information of the sensing device configured to supplementarily collect the map data in the first region. The configuration information of the sensing device configured to supplementarily collect the map data in the first region is optional information of the first supplementary collection information. The configuration information of the sensing device indicated by the first supplementary collection information helps a vehicle that wants to perform the supplementary collection determine whether a configuration of a sensing device of the vehicle meets a requirement, or adjust a corresponding configuration of the sensing device of the vehicle in a timely manner.

The configuration information of the sensing device includes at least one of the following content: a focal length, an angle of view, an aperture, a type of a photosensitive element, and the like of a camera; a line quantity, a maximum recognition distance, beam divergence, a maximum scanning sector, a scanning frequency, a pulse emission frequency, and the like of a lidar; and a detection angle range, angle resolution, angle measurement precision, a maximum detection speed, speed resolution, a maximum working distance, and distance resolution of a millimeter-wave radar.

In a specific implementation, the first supplementary collection information further includes the information indicating the time for performing the supplementary collection. The information indicating the time for performing the supplementary collection is optional information of the first supplementary collection information. The time information in the first supplementary collection information helps the receiver of the first supplementary collection information perform supplementary collection on the map data of the first region in a timely manner, to meet a timeliness requirement on the time for performing supplementary collection.

For example, the time information may indicate a moment, for example, 10:08 AM, which indicates that a moment at which the vehicle that performs supplementary collection arrives at the first region is required not to be later than 10:08 AM.

For example, the time information may alternatively indicate a time period, for example, 10:00 AM to 10:18 AM. In one manner, the time information indicates that the vehicle that performs supplementary collection arrives at the first region in the time period from 10:00 AM to 10:18 AM. In another manner, the time information indicates that the vehicle that performs supplementary collection completes supplementary collection on the map data of the first region in the time period from 10:00 AM to 10: 18 AM.

In a specific implementation, the first supplementary collection information further includes the type information of the to-be-supplementarily-collected map data in the first region. The type information of the to-be-supplementarily-collected map data in the first region is optional information of the first supplementary collection information.

A type of the to-be-supplementarily-collected map data in the first region may be raw data or processed data. The raw data indicates that the vehicle that performs supplementary collection does not perform any processing on the collected map data of the first region. The processed data indicates that the vehicle that performs supplementary collection performs a processing operation on the collected map data of the first region, for example, extracting a map element or removing some abnormal data. Therefore, the type information of the to-be-supplementarily-collected map data in the first region helps the vehicle that performs supplementary collection correctly process the collected map data of the first region, to improve accuracy and collection efficiency of the map data.

In a specific implementation, the first supplementary collection information further includes the information indicating the to-be-supplementarily-collected map element in the first region. The information indicating the to-be-collected map element in the first region is optional information of the first supplementary collection information. The information indicating the to-be-supplementarily-collected map element in the first region is used, so that the vehicle that performs supplementary collection can implement refined collection of the map data of the first region, to improve supplementary collection efficiency and accuracy of the map data.

For details about the map element, refer to related descriptions about the map element in S101. The information about the map element includes at least one of the following: location information of the map element, collection priority information of the map element, type information of the map element, and identification information of the map element.

The type information of the map element indicates a type of the map element. For example, a type to which the map element belongs may be classified into a ground type and a non-ground type based on whether the map element is located on the ground, or may be classified into the following three types based on a function of the map element: a ground identifier, a lane line, and a road sign. There are a plurality of specific classification manners. This is not limited herein. The type information of the map element is used, so that the vehicle that performs supplementary collection can accurately learn a specific type of the to-be-collected map element. This helps improve map element collection efficiency.

The collection priority information indicates a collection sequence of map elements. The collection priority information of the map element can be used to effectively distinguish map elements of different collection urgency degrees in the first region. This helps to distinguish priorities, and improve supplementary collection efficiency of the map data in the first region.

For example, collection priority division may be as follows: A collection priority of a map element that affects safe driving is the highest, a collection priority of a map element that affects driving behavior is the second highest, and a collection priority of a map element that assists in vehicle positioning is the lowest. The map element that affects safe driving may be, for example, a lane line, a road fence, or a traffic light sign. The map element that affects driving behavior may be, for example, a guide indication line (for example, a steering arrow), a deceleration prompt line, an identification line of a turn waiting region, a gore line, or a ground number (for example, a speed limit sign).

For example, collection of a lane line needs to be preferentially performed compared with collection of a speed limit number on a straight lane. Therefore, a collection priority of the lane line is higher than a collection priority of the speed limit number on the straight lane.

In a specific implementation, the first supplementary collection information further includes the information about the reason why the map data in the first region needs to be supplementarily collected. The information about the reason why the map data in the first region needs to be supplementarily collected is optional information of the first supplementary collection information. The reason information is used, so that the vehicle that performs supplementary collection on the map data of the first region can more pertinently collect the map data of the first region, to improve map data collection accuracy.

The information about the reason why the map data in the first region needs to be supplementarily collected includes at least one of the following content: Collection fails to be performed on the first region due to blocking of a moving object; collection fails to be performed on the first region due to a limitation of a collection field of view of the first vehicle; precision of the collected map data of the first region is low; and the collected map data of an image type of the first region is blurred.

In a specific implementation, the first supplementary collection information further includes the identification information of the target vehicle. The identification information of the target vehicle is optional information of the first supplementary collection information. The identification information of the target vehicle helps the receiver of the first supplementary collection information determines whether the receiver is the target vehicle that performs supplementary collection.

The target vehicle is a vehicle that performs supplementary collection on the map data of the first region. For example, the target vehicle may be the second vehicle. The identification information of the target vehicle is used to identify a corresponding vehicle, and the identification information of the target vehicle may be a vehicle identification number (vehicle identification number, VIN).

In a specific implementation, the first supplementary collection information further includes at least one of the motion status information of the first vehicle and the identification information of the first vehicle. The motion status information of the first vehicle and the identification information of the first vehicle are optional information of the first supplementary collection information.

The motion status information of the first vehicle includes at least one of position information, speed information, course information, acceleration, an angular velocity, a steering wheel angle, predicted track information, and the like of the first vehicle. The motion status information of the first vehicle helps a vehicle that is located behind the first vehicle and that performs supplementary collection to adjust a travel path, a speed, and the like in a timely manner, so as to better perform supplementary collection on the map data of the first region, to improve integrity of the collected map data.

The identification information of the first vehicle is used to identify the first vehicle. The identification information of the first vehicle helps the receiver of the first supplementary collection information accurately know a publisher of a supplementary collection task.

In a specific implementation, the first supplementary collection information further includes at least one of the identification information of the lane in the first region and/or the identification information of the road in the first region. The identification information of the lane in the first region and the identification information of the road in the first region are optional information of the first supplementary collection information.

The identification information of the lane is used to identify a corresponding lane on the map, and the identification information of the road is used to identify a corresponding road on the map. The identification information may be a combination of one or more characters. The character may be one or more of a digit, a letter, and another symbol, for example, a combination of one or more digits, or a combination of one or more pieces of data and letters. The identification information of the lane in the first region and/or the identification information of the road in the first region enable/enables the receiver of the first supplementary collection information to quickly determine whether the receiver is currently located in the lane and/or the road of the first region.

In some possible embodiments, the first supplementary collection information further includes supplementary collection confidence of the first region.

In some possible embodiments, in addition to being used as a sender of the first supplementary collection information, the first vehicle may be used as a receiver of supplementary collection information. For example, the first vehicle may alternatively receive second supplementary collection information sent by another vehicle, where the second supplementary collection information indicates that map data of a second region needs to be supplementarily collected; and the first vehicle collects map data based on the second supplementary collection information.

Optionally, in some possible embodiments, the first vehicle may further perform at least one of the following operations on a display interface:
(1) marking a region on which the first vehicle has performed collection;
(2) marking the first region that requires supplementary collection; and
(3) marking, by using different colors, the region on which the first vehicle has performed collection and the first region.

S103: The second vehicle adjusts a travel path and a speed of the second vehicle and/or controls a sensing device on the second vehicle based on the first supplementary collection information.

The adjusted travel path of the second vehicle passes through the first region.

The first supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of the target vehicle, motion status information of the first vehicle, and identification information of the first vehicle. It should be noted that, for details about each piece of information in the first supplementary collection information, refer to descriptions of corresponding content in the first supplementary collection information in S 102. Details are not described herein again.

In a specific implementation, the first supplementary collection information includes the information indicating the time for performing supplementary collection. That the second vehicle adjusts a travel path and a speed of the second vehicle and/or controls a sensing device on the second vehicle based on the first supplementary collection information includes: The second vehicle adjusts the travel path and the speed of the second vehicle and/or controls the sensing device on the second vehicle based on the time information and a location of the first region.

For example, it is assumed that the second vehicle is a vehicle A, the vehicle A travels based on a preset path 1, and the vehicle A receives the first supplementary collection information in a traveling process. The first supplementary collection information includes the location of the first region and the information indicating the time for performing supplementary collection (for example, "10:08 AM"). The vehicle A estimates, based on the preset path 1, that a moment at which the vehicle A arrives at the first region as soon as possible is 10:03 AM, and is later than 10:08 AM. In this case, the vehicle A adjusts the preset path 1 and/or a speed based on the time information and the location of the first region, so that a moment at which the vehicle A arrives at the first region is earlier than 10:08 AM, to meet a requirement for timeliness of supplementary collection of map data.

In some possible embodiments, the second vehicle may further adjust the travel path and the speed of the second vehicle and/or control the sensing device on the second vehicle based on the first supplementary collection information, a collection field of view, and motion status information of a moving object. In this way, in a process in which the second vehicle performs supplementary collection on the map data of the first region, locations of the second vehicle and a surrounding moving object can be staggered in a timely manner, so that a ground region blocked by the moving object can be exposed as much as possible, and the second vehicle can collect map data of more regions.

For example, the second vehicle determines, based on the motion status information of the moving object, a blocking status of the first region at a current location; and adjusts the travel path of the second vehicle, so that when the second vehicle travels along an adjusted travel path, the first region falls within a real-time collection field of view of the first vehicle as much as possible.

In a specific implementation, the controlling the sensing device on the second vehicle includes at least one of the following content:
turning on a first sensing device on the second vehicle;
turning off the first sensing device on the second vehicle; and
adjusting a configuration parameter of the first sensing device on the second vehicle.

The first sensing device may be at least one of a camera, a lidar, a millimeter-wave radar, and an ultrasonic radar. In other words, to reduce consumption of a resource (for example, electric energy) on the second vehicle, some sensing devices on the second vehicle or a specified sensing device may be controlled to be turned on when the sensing devices/device need/needs to be used, and turned off when the sensing devices/device do/does not need to be used.

For example, the second vehicle receives the first supplementary collection information, where the first supplementary collection information includes type information of a sensing device configured to supplementarily collect the map data in the first region. It is assumed that the type information of the sensing device indicates a lidar. If the second vehicle does not turn on the lidar before, the lidar is turned on. In some possible embodiments, the second vehicle may alternatively turn on the camera and the lidar, turn on the camera and turn off the ultrasonic radar, or the like. This is not specifically limited herein.

Further, the turning on a first sensing device on the second vehicle includes: turning on the first sensing device at preset time and/or when the second vehicle arrives at a preset location.

Further, the turning off the first sensing device on the second vehicle includes: turning off the first sensing device at preset time and/or when the second vehicle arrives at a preset location.

In other words, when the first sensing device on the second vehicle is controlled, the first sensing device may be turned on when the first sensing device needs to be used, and turned off when the first sensing device does not need to be used.

Optionally, in some possible embodiments, the second vehicle may further send feedback information to the first vehicle or a server, where the feedback information indicates that the second vehicle supplementarily collects the map data in the first region. In other words, the second vehicle notifies, based on the feedback information, the first vehicle or the server that the second vehicle selects to perform supplementary collection on the map data of the first region.

In a specific implementation, the feedback information further indicates at least one of the following content:
a region that is in the first region and on which the second vehicle has performed collection;
a region that is in the first region and on which the second vehicle has not performed collection;
a map element that has been collected by the second vehicle in the first region; and
a map element that has not been collected by the second vehicle in the first region.

It can be learned that when performing supplementary collection on the map data of the first region, the second vehicle may supplementarily collect all or some map data of the first region or supplementarily collect all or some map elements of the first region based on an actual situation of the second vehicle. This is not specifically limited herein.

In some possible embodiments, in addition to being used as a receiver of the first supplementary collection information, the second vehicle may be used as a sender of supplementary collection information. For example, the second vehicle sends third supplementary collection information, where the third supplementary collection information indicates that map data of a third region needs to be supplementarily collected.

Optionally, in some possible embodiments, the following may be further performed.

S 104: The second vehicle generates a display interface based on the first supplementary collection information.

In embodiments of this application, after receiving the first supplementary collection information, the second vehicle may display the generated display interface by using a display apparatus of the second vehicle. The display apparatus may be an instrument panel, a vehicle-mounted display, a head up display (head up display, HUD) system, or the like. This is not specifically limited herein.

In embodiments of this application, at least one of the following content may be presented on the display interface:
(1) marking, on a map, a supplementary collection path used by the second vehicle to perform supplementary collection;
(2) displaying prompt information on the map, where the prompt information is used to inform a user of a travel cost difference between the supplementary collection path and a pre-generated navigation path;
(3) marking at least a partial region selected by the user in the first region;
(4) marking a region that is in the first region and on which the second vehicle has performed collection; and
(5) displaying information used to inform the user that the second vehicle needs to adjust or has adjusted a sensing device because the second vehicle performs supplementary collection.

The pre-generated navigation path may be generated by a network side device (for example, the server) and then sent to the second vehicle, or may be planned and generated by the second vehicle. This is not specifically limited herein.

A path (for example, the supplementary collection path or the pre-generated navigation path) may be expressed in a plurality of manners, for example, may be represented at a road level or represented at a lane level. It may be understood that a path represented at a lane level is more refined than a path represented at a road level.

In an implementation, the path may be represented at the road level. To be specific, the path may be represented by an identifier ID of a road in the map and at least one parameter relative to a reference point of the road (for example, a start point of the road), for example, a distance and coordinates. For example, a path represented as "road ID=6888, [10, 120]" indicates that the path is an interval range from 10 m to 120 m away from a start point of a road whose road ID is 6888. In some possible embodiments, when a path passes through a plurality of road regions, the path may be alternatively represented by using a sequence of a plurality of road IDs in a map. This is not specifically limited herein.

In another implementation, the path may be represented at the lane level. To be specific, the path may be represented by using a sequence of a plurality of lane IDs in the map. For example, the path is represented as "lane ID sequence {100, 102, 103, 104, ...}". Lanes indicated by different lane IDs in the lane ID sequence may belong to a same road, or may belong to different roads. This is not specifically limited herein. In some possible embodiments, when a path is represented at a lane level, a lane ID and a (c, d) interval representation of a start-end range indicated based on a lane reference point may be further combined.

The supplementary collection path used by the second vehicle to perform supplementary collection is displayed on the map, to intuitively and clearly display the supplementary collection path and a region that the supplementary collection path passes through to the user, and further display a dynamic change of the supplementary collection path.

For example, the supplementary collection path may be obtained by adjusting the pre-generated navigation path by the second vehicle based on a location of the first region, or may be a path replanned by the second vehicle based on a location of the first region.

In some possible embodiments, the supplementary collection path and the pre-generated navigation path may be displayed on the display interface at the same time, so as to present an effect of comparison between the supplementary collection path and the navigation path. Further, the prompt information may be further presented on the display interface. The prompt information is used to remind the user of the travel cost difference between the supplementary collection path and the pre-generated navigation path. Travel costs include at least one of time consumption, travel mileage, fuel consumption, power consumption, a driving environment safety level, a danger level of a path, road toll consumption, and the like. The prompt information helps improve vehicle decision accuracy. For example, in a crowdsourcing collection scenario, before selecting whether to perform the supplementary collection work, the vehicle may make a correct decision with reference to the prompt information.

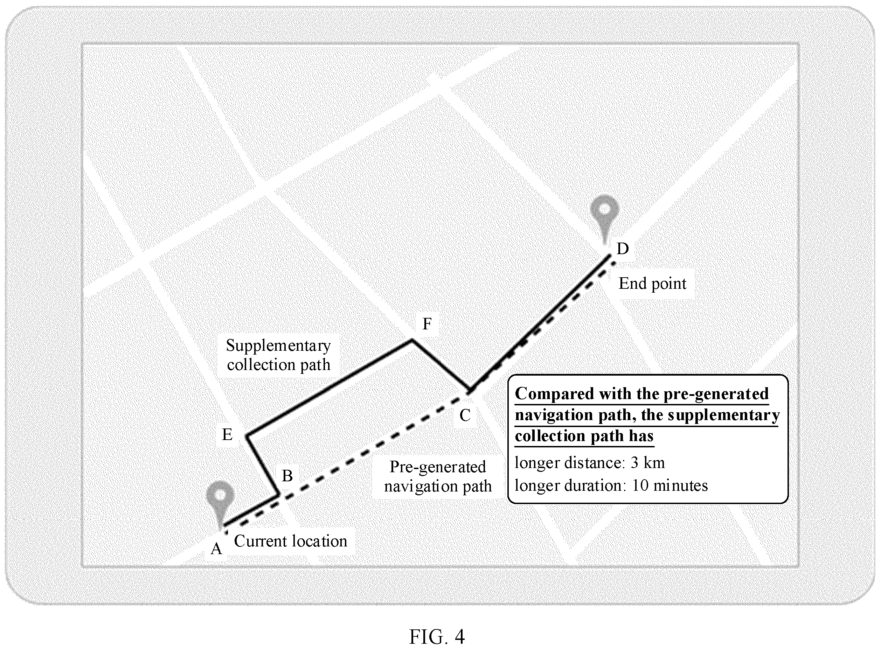

For example, FIG. 4 is a diagram of a display interface according to an embodiment of this application. It can be learned that the display interface shown in FIG. 4 shows a supplementary collection path and a pre-generated navigation path of a vehicle. The pre-generated navigation path is a path that passes through A-B-C-D and that is represented by a dashed line, and the supplementary collection path is a path that passes through A-B-E-F-C-D and that is represented by a solid line. Prompt information "Compared with the pre-generated navigation path, the supplementary collection path travels 3 kilometers more and takes 10 minutes more" is listed in a box in a lower right corner of the display interface. It can be learned that the prompt information in FIG. 4 mainly displays a travel cost difference between time consumption and travel mileage. In some possible embodiments, more or less travel cost difference information than the time consumption and the travel mileage may be further displayed in the prompt information. This is not specifically limited herein.

At least a partial region selected by a user is marked on the display interface, that is, the user may select, based on a situation of the user, whether to perform supplementary collection. When the user selects to perform supplementary collection, the at least partial region selected by the user may be displayed on the display interface, to improve interaction experience of the user. In addition, it is also convenient for the second vehicle to observe in real time whether the second vehicle deviates from a to-be-supplementarily-collected region. This helps to improve accuracy of collected map data.

A region that is in a first region and on which a second vehicle has performed collection is marked, so that the second vehicle can quickly learn a completion status of a supplementary collection work performed by the second vehicle in the first region. In some possible embodiments, a region that is in the first region and on which the second vehicle has not performed collection may be further marked, a map element that has been collected by the second vehicle in the first region may be further marked, or a map element that has not been collected by the second vehicle in the first region may be further marked. This is not specifically limited herein.

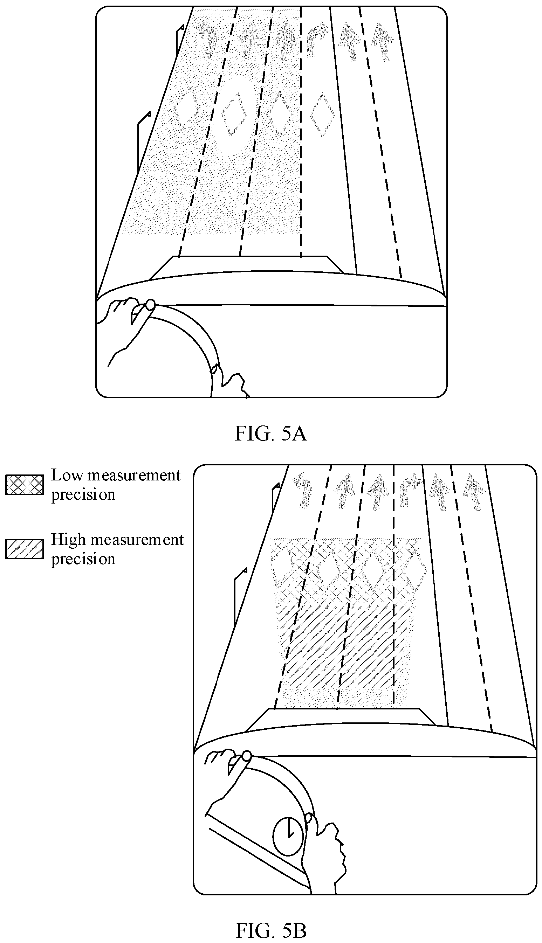

Refer to FIG. 5A. FIG. 5A is a diagram of another display interface according to an embodiment of this application. The display interface shown in FIG. 5A displays a first region selected by a second vehicle and a region that is in the first region and on which the second vehicle has not performed collection. A trapezoidal region on a road ahead indicates the first region that is selected by the second vehicle and on which supplementary collection is to be performed, and an elliptical region on the road indicates the region that has not been collected by the second vehicle in the first region. In addition, in FIG. 5A, lanes of the road ahead have steering arrow pattern identifiers, and a diamond pattern identifier in a lane indicates driving with deceleration.

When the second vehicle selects to perform supplementary collection, when a sensing device needs to be adjusted or after a sensing device has been adjusted, the second vehicle may display related information on the display interface to inform a user.

In some possible embodiments, a collection field of view of the second vehicle at a current location may be further presented on the display interface. In this way, it is convenient for the second vehicle to adjust a travel path of the second vehicle, so that the collection field of view at the current location can cover more to-be-supplementarily-collected regions as much as possible.

In some possible embodiments, regions corresponding to different measurement precision in the collection field of view may be further marked by using different colors on the display interface, so that when the second vehicle may adjust the travel path and/or a speed when collecting map data in a corresponding region, the to-be-supplementarily-collected region in front of the second vehicle falls within a region with high measurement precision in the current collection field of view as much as possible. This helps improve precision of the collected map data.

Refer to FIG. 5B. FIG. 5B is a diagram of another display interface according to an embodiment of this application. In FIG. 5B, regions corresponding to different measurement precision in a collection field of view at a current location of a second vehicle are presented. A region filled with left slashes indicates a region with high measurement precision in the collection field of view, and a region filled with cross grids indicates a region with low measurement precision in the collection field of view.

It should be noted that FIG. 4, FIG. 5A, and FIG. 5B are merely some examples of the display interface. In embodiments of this application, the display interface is not limited to forms shown in FIG. 4, FIG. 5A, and FIG. 5B.

In some possible embodiments, regions in which map elements with different collection priorities in the first region are located may alternatively be marked by using different colors on the display interface, so that distribution of the map elements in the first region is intuitively displayed.

It can be learned that, in embodiments of this application, a vehicle may send supplementary collection information, so that a receiver of the supplementary collection information knows that map data of a region needs to be supplementarily collected. This helps improve integrity or collection efficiency of the map data. In addition, the vehicle may alternatively be used as a receiver of supplementary collection information. After receiving the supplementary collection information sent by another vehicle, the vehicle may dynamically adjust a travel path and a speed of the vehicle and/or control a related sensing device through active decision-making, to better perform supplementary collection on map data of a target region. In other words, the vehicle may improve collection efficiency of the map data through collaborative interaction, and reduce manpower and time consumption required for map data collection.

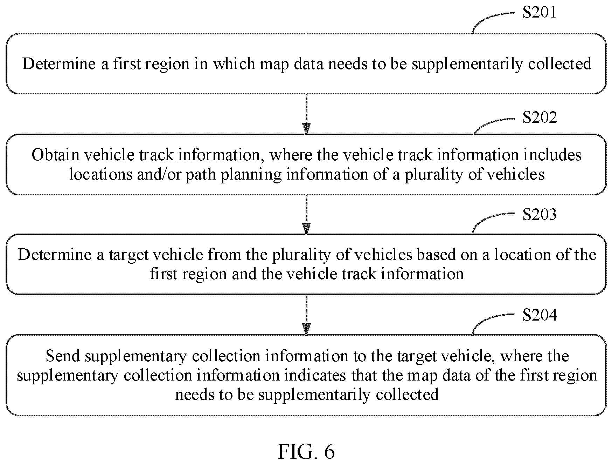

Refer to FIG. 6. FIG. 6 is another data collection method according to this application, and the method is applied to a network side device. The method includes but is not limited to the following steps.

S201: Determine a first region in which map data needs to be supplementarily collected.

In this embodiment of this application, the determining a first region in which map data needs to be supplementarily collected includes: receiving supplementary collection information from a first vehicle, where the supplementary collection information indicates that the map data of the first region needs to be supplementarily collected; and determining, based on the supplementary collection information, the first region in which the map data needs to be supplementarily collected.

The supplementary collection information received from the first vehicle is equivalent to the first supplementary collection information in embodiments in FIG. 3. For details about content of the supplementary collection information, refer to descriptions of the first supplementary collection information. Details are not described herein again.

S202: Obtain vehicle track information, where the vehicle track information includes locations and/or path planning information of a plurality of vehicles.

In this embodiment of this application, the obtaining vehicle track information includes: receiving the vehicle track information from the plurality of vehicles.

In other words, each of the plurality of vehicles has a corresponding location and corresponding path planning information, the location of the vehicle indicates a geographical location of the vehicle at a current moment on a map, and the path planning information of the vehicle indicates a planned path of the vehicle.

S203: Determine a target vehicle from the plurality of vehicles based on a location of the first region and the vehicle track information.

In an implementation, a manner of determining the target vehicle meets any one of the following cases:
(1) determining, based on a location of the target vehicle, that a distance between the target vehicle and the first region is less than a distance threshold;
(2) determining, based on path planning information of the target vehicle, that a planned path of the target vehicle passes through the first region; and
(3) determining, based on the location and the path planning information of the target vehicle, that time at which the target vehicle arrives at the first region meets a time condition.

It can be learned that a convenience degree or a road passing degree of performing supplementary collection by the vehicle may be measured based on the location and/or the path planning information of the vehicle.

In embodiments of this application, the determining a target vehicle from the plurality of vehicles based on a location of the first region and the vehicle track information includes: determining the target vehicle from the plurality of vehicles based on the location of the first region, the vehicle track information, and reference information, where the reference information includes at least one of the following content:
collection precision information of the vehicles, operation cost information of the vehicles, historical participation degrees of the vehicles, vehicle model information of the vehicles, configuration information of sensing devices of the vehicles, identification information of the vehicles, identification information of users who use the vehicles, and information indicating time for performing supplementary collection.

Higher collection precision of a vehicle indicates higher precision of map data collected by the vehicle. Collection precision information of the vehicle is related to configuration information of a sensing device of the vehicle. A better configuration of the sensing device of the vehicle indicates higher collection precision of the vehicle.

A historical participation degree of a vehicle may be a quantity of times or a frequency at which the vehicle historically performs supplementary collection on map data based on received supplementary collection information. Operation cost information of a vehicle indicates an operation ease degree of the vehicle travelling from a current location to the first region.

For example, it is assumed that a vehicle A needs to change lanes twice and turn left once when travelling from a current location to the first region, and a vehicle B needs to change a lane once when travelling from a current location to the first region. Therefore, an operation performed by the vehicle B is easier than an operation performed by the vehicle A, and operation costs of the vehicle B are less than operation costs of the vehicle A.

Vehicles of different vehicle models have different driving control complexities, and may also have different operation costs. For example, control of a small-sized vehicle is more flexible than control of medium- and large-sized vehicles. Therefore, operation costs of the small-sized vehicle are lower than operation costs of the medium- and large-sized vehicles.

A vehicle with a higher degree of autonomous driving not only has lower operation difficulty, but also has higher acceptance for a driving operation. For example, operation costs of a vehicle with an autonomous driving function are lower than operation costs of a vehicle with a driving assistance function, or operation costs of an unmanned vehicle are lower than operation costs of a vehicle that is driven by a person.

The identification information of the vehicle helps the network side device determine whether the vehicle is a vehicle that is registered and that has high credibility, or determine whether the vehicle is allowed to perform supplementary collection.

The identification information of the user who uses the vehicle is used, so that the network side device may view credit points of the user by associating indexes, to determine whether the user who uses the vehicle is a blacklisted user. If the user who uses the vehicle is the blacklisted user, the vehicle used by the user is not selected as the target vehicle.

In some possible embodiments, sometimes a region in which map data is to be supplementarily collected is a key confidential region. In this case, the identification information of the user who uses the vehicle is used, so that the network device may determine whether the user who uses the vehicle is a sensitive user that is forbidden to enter the key confidential region. If the user who uses the vehicle is the sensitive user, the vehicle used by the user is not selected as the target vehicle.

The information indicating the time for performing supplementary collection imposes a requirement on timeliness of performing supplementary collection. This ensures data freshness of the map data of the first region that is obtained through supplementary collection.

In a specific implementation, a matching degree corresponding to each vehicle may be obtained based on the location of the first region and the vehicle track information, and a vehicle corresponding to a matching degree greater than a threshold is used as the target vehicle.

It may be understood that, when another factor remains unchanged, a higher road passing degree (which may be obtained based on the location and/or the path planning information of the vehicle) of the vehicle indicates a higher probability that the vehicle is selected as the target vehicle; when another factor remains unchanged, higher collection precision of the vehicle indicates a higher probability that the vehicle is selected as the target vehicle; when another parameter remains unchanged, a higher historical participation degree of the vehicle indicates a higher probability that the vehicle is selected as the target vehicle; when another parameter remains unchanged, lower operation costs of the vehicle indicate a higher probability that the vehicle is selected as the target vehicle; when another parameter remains unchanged, a vehicle that meets a timeliness requirement of the time information is more likely to be selected as the target vehicle; or the like. This is not specifically limited herein.

S204: Send supplementary collection information to the target vehicle, where the supplementary collection information indicates that the map data of the first region needs to be supplementarily collected.

In embodiments of this application, when there are a plurality of target vehicles, the sending supplementary collection information to the target vehicle includes: broadcasting the supplementary collection information. In this way, efficiency of sending the supplementary collection information can be improved, and efficiency of collecting the map data of the first region can also be improved.

In embodiments of this application, the supplementary collection information includes at least one of the following content: information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of the target vehicle, motion status information of the first vehicle, and identification information of the first vehicle. It should be noted that, for details about each piece of information in the supplementary collection information, refer to descriptions of corresponding content in the first supplementary collection information in S102 in embodiments in FIG. 3. For brevity of the specification, details are not described herein again.

It can be learned that, according to embodiments of this application, the network side device may select, based on the supplementary collection information obtained from the vehicle and locations, path planning information, capability information, and the like of each vehicle, a vehicle suitable for performing supplementary collection on the map data, so that collection efficiency and integrity of the map data can be effectively improved.

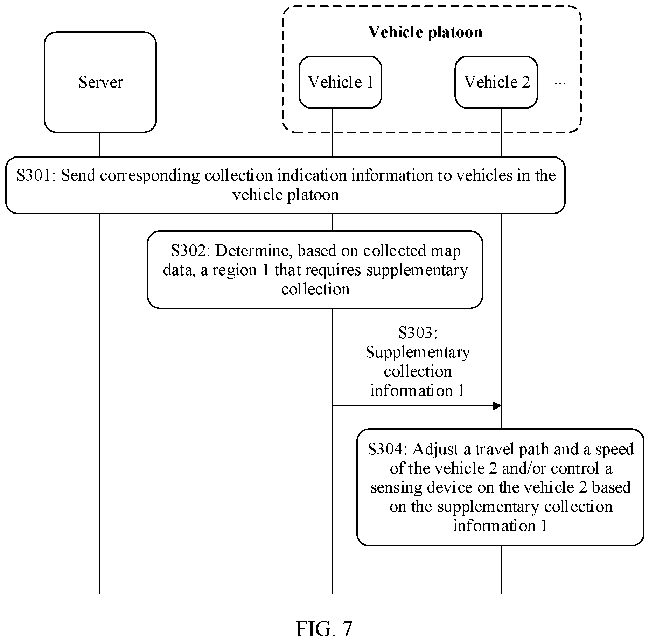

Refer to FIG. 7. FIG. 7 is a flowchart of another data collection method according to an embodiment of this application, and the method is applied to a system including a server and a vehicle. The method includes but is not limited to the following steps.

S301: The server sends corresponding collection indication information to vehicles in a vehicle platoon.

Optionally, the server sends the corresponding collection indication information to the vehicle in the vehicle platoon.

In an implementation, the server sends corresponding collection indication information to each vehicle in the vehicle platoon. For example, the vehicle platoon includes a vehicle 1 and a vehicle 2. The server sends collection indication information 1 to the vehicle 1 in the vehicle platoon, where the collection indication information 1 includes a location of a geographical range 1 and a preset path 1. The server sends collection indication information 2 to the vehicle 2 in the vehicle platoon, where the collection indication information 2 includes a location of a geographical range 2 and a preset path 2.

Collection indication information obtained by a vehicle indicates a map region in which the vehicle is responsible for performing collection. For example, the collection indication information 1 indicates that the vehicle 1 is responsible for collecting map data of the geographical range 1. The collection indication information obtained by the vehicle further indicates a travel path of the vehicle. For example, the collection indication information 1 further indicates that a travel path of the vehicle 1 is the preset path 1.

Preset paths of different vehicles in the vehicle platoon may be the same, or may be different. The preset path of the vehicle may be represented at a road level or a lane level.

The vehicle platoon may be pre-arranged by the server. Each vehicle in the vehicle platoon has a corresponding number, and the number of the vehicle indicates a sequence number of the vehicle in the vehicle platoon.

Any two adjacent vehicles in the vehicle platoon meet a time constraint condition and/or a space constraint condition. It is assumed that the vehicle 1 and the vehicle 2 are any two adjacent vehicles in the vehicle platoon, and the vehicle 2 is located behind the vehicle 1. That the vehicle 1 and the vehicle 2 meet the time constraint condition may be that a ratio of a distance between the vehicle 2 and the vehicle 1 to a traveling speed of the vehicle 2 is greater than or equal to a first threshold. That the vehicle 1 and the vehicle 2 meet the space constraint condition indicates that the distance between the vehicle 1 and the vehicle 2 is greater than or equal to a second threshold. In some possible embodiments, the vehicle 1 and the vehicle 2 may alternatively meet both the time constraint condition and the space constraint condition.

In another implementation, the server sends the collection indication information to the vehicles in the vehicle platoon in a broadcast manner. In other words, the collection indication information received by the vehicles in the vehicle platoon is the same.

S302: The vehicle 1 determines, based on the collected map data, a region 1 that requires supplementary collection.

The region 1 is equivalent to the first region in embodiments in FIG. 3.

It may be understood that the map data collected by the vehicle 1 is obtained through collection based on the received collection indication information 1. When the vehicle 1 performs collection on map data, the vehicle 1 may dynamically adjust the preset path 1 based on a collection field of view of a current location, motion status information of a moving object in front of the vehicle 1, and the location of the geographical range 1, to better collect the map data.

S303: The vehicle 1 sends supplementary collection information 1 to the vehicle 2.

The supplementary collection information 1 is equivalent to the first supplementary collection information in embodiments in FIG. 3. For content of the supplementary collection information 1, refer to related descriptions of the first supplementary collection information in the foregoing embodiments. Details are not described herein again.

In an implementation, the vehicle 2 is a vehicle that is adjacent to the vehicle 1 and that is located behind the vehicle 1.

In an implementation, the vehicle 2 is any one of vehicles located behind the vehicle 1 in the vehicle platoon.

In an implementation, the vehicle 2 meets at least one of the following conditions: a distance between the vehicle 2 and the region 1 is less than a distance threshold; a planned path of the vehicle 2 passes through the region 1; and time at which the vehicle 2 arrives at the region 1 meets a time condition.

In an implementation, the vehicle 1 may not only be used as a sender of the supplementary collection information, but also be used as a receiver of supplementary collection information.

S304: The vehicle 2 adjusts a travel path and a speed of the vehicle 2 and/or controls a sensing device on the vehicle 2 based on the supplementary collection information 1.

For details about this step, refer to related descriptions of S 103 in embodiments in FIG. 3. The vehicle 2 is equivalent to the second vehicle. For brevity of the specification, details are not described herein again.

In an implementation, the vehicle 2 may alternatively adjust the travel path and the speed of the vehicle 2 and/or control the sensing device on the vehicle 2 based on the supplementary collection information 1 and the collection indication information 2. In other words, when collecting map data, the vehicle 2 not only considers a to-be-supplementarily-collected region, but also considers a region for which the vehicle 2 is responsible.

In an implementation, the vehicle 2 may further send supplementary collection information 2 to a vehicle behind the vehicle 2 in the vehicle platoon, where the supplementary collection information 2 indicates that map data in a region 2 needs to be supplementarily collected. For example, the vehicle 2 determines, based on map data collected by the vehicle 2, the region 2 that supplementary collection, and sends the supplementary collection information 2, where the supplementary collection information 2 indicates that the map data in the region 2 needs to be supplementarily collected.

In some possible embodiments, the vehicle 2 may further generate a display interface based on the supplementary collection information 1. For details, refer to related descriptions of S104 in embodiments in FIG. 3.

It can be learned that, in embodiments of this application, when map data is collected in a professional vehicle platoon manner, a vehicle in the vehicle platoon is notified, in a collaborative interaction manner, of a region in which map data needs to be supplementarily collected, to improve map data collection coverage and map data collection efficiency.

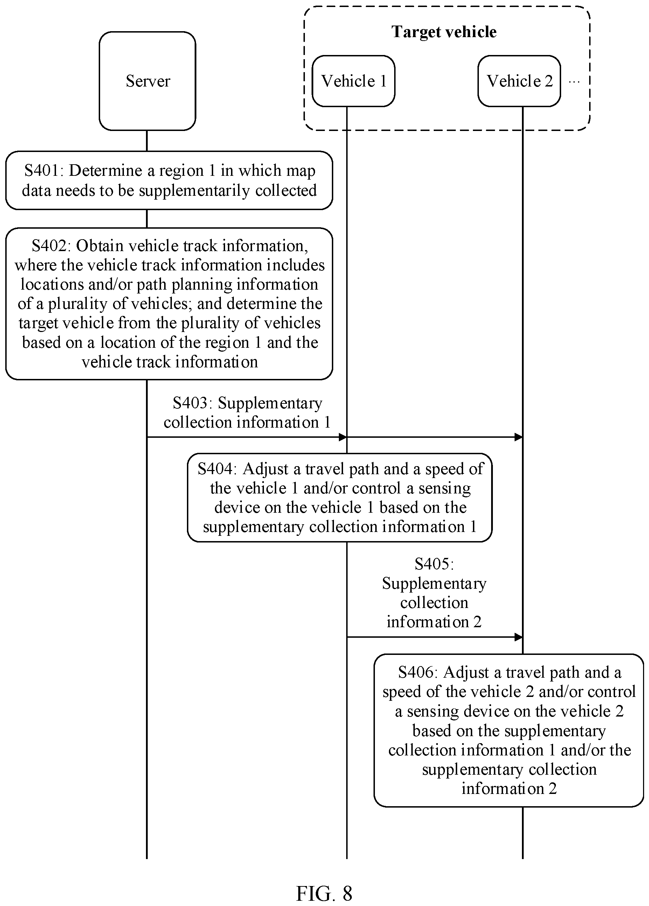

Refer to FIG. 8. FIG. 8 is a flowchart of another data collection method according to an embodiment of this application, and the method is applied to a system including a server and a vehicle. The method includes but is not limited to the following steps.

S401: The server determines a region 1 in which map data needs to be supplementarily collected. For details about this step, refer to descriptions of S201 in embodiments in FIG. 6. Details are not described herein again.

S402: The server obtains vehicle track information, where the vehicle track information includes locations and/or path planning information of a plurality of vehicles; and determines a target vehicle from the plurality of vehicles based on a location of the region 1 and the vehicle track information. For details about this step, refer to descriptions of S202 and S203 in embodiments in FIG. 6. Details are not described herein again.

S403: The server sends supplementary collection information 1 to the target vehicle. For specific content of the supplementary collection information 1, refer to related descriptions of the first supplementary collection information in embodiments in FIG. 3.

In an implementation, there are a plurality of target vehicles, and the server sends the supplementary collection information 1 to the target vehicles in a broadcast manner. It can be learned that the server simultaneously sends supplementary collection information to a plurality of vehicles in a broadcast manner, so that the plurality of vehicles can perform supplementary collection based on the supplementary collection information. This not only can implement map data backup, but also improves map data collection efficiency.

S404: The vehicle 1 adjusts a travel path and a speed of a vehicle 1 and/or controls a sensing device on the vehicle 1 based on the supplementary collection information 1.

The vehicle 1 is any one of the target vehicles. After receiving the supplementary collection information 1, the vehicle 1 may select, based on an actual situation of the vehicle 1, whether to perform supplementary collection. When determining to perform supplementary collection, the vehicle 1 adjusts the travel path and the speed of the vehicle 1 and/or controls the sensing device on the vehicle 1 based on the supplementary collection information 1.

In an implementation, in a process in which the vehicle 1 determines to perform supplementary collection based on the supplementary collection information 1, the vehicle 1 may further selectively perform supplementary collection on some regions in a first region, or selectively perform supplementary collection on some map elements in a first region, or the vehicle 1 may perform supplementary collection on all map elements in a first region. This is not specifically limited herein.

S405: The vehicle 1 sends supplementary collection information 2 to a vehicle 2.

Specifically, the vehicle 1 determines, based on the data collected in S404, a region 2 that requires supplementary collection, and sends the supplementary collection information 2 to the vehicle 2, where the supplementary collection information 2 indicates that map data in the region 2 needs to be supplementarily collected.

S406: The vehicle 2 adjusts a travel path and a speed of the vehicle 2 and/or controls a sensing device on the vehicle 2 based on the supplementary collection information 1 and/or the supplementary collection information 2.

It can be learned that, in embodiments of this application, a collaborative crowdsourcing collection manner is used, so that processing efficiency of a collection task can be effectively improved, update efficiency and detection efficiency of map data are improved, and map data freshness can be maintained.

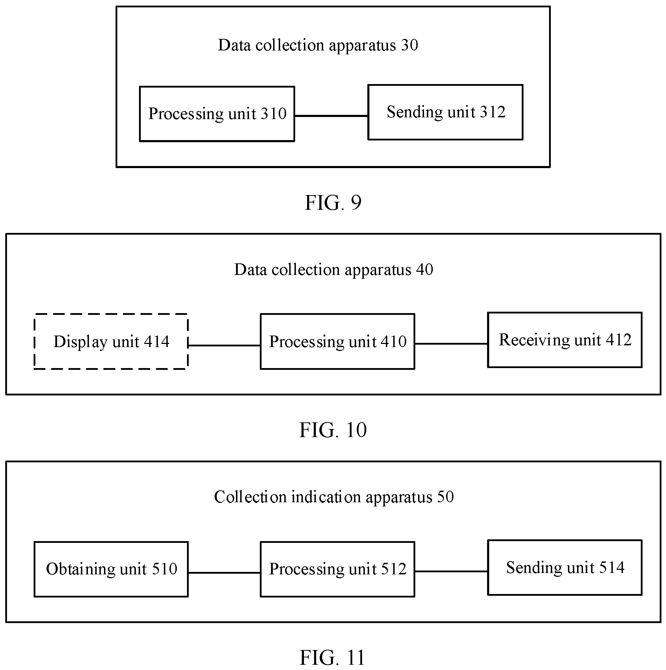

Refer to FIG. 9. FIG. 9 is a diagram of a structure of a data collection apparatus according to an embodiment of this application. The data collection apparatus 30 includes a processing unit 310 and a sending unit 312. The data collection apparatus 30 may be implemented by using hardware, software, or a combination of software and hardware.

The processing unit 310 is configured to determine, based on map data collected by a first vehicle, a first region that requires supplementary collection. The sending unit 312 is configured to send first supplementary collection information, where the first supplementary collection information indicates that map data of the first region needs to be supplementarily collected.

In some possible embodiments, the data collection apparatus 30 further includes a receiving unit (not shown in the figure). The receiving unit is configured to receive second supplementary collection information sent by another vehicle, where the second supplementary collection information indicates that map data of a second region needs to be supplementarily collected. Correspondingly, the data collection apparatus 30 collects map data based on the second supplementary collection information.

The data collection apparatus 30 may be configured to implement the method at the first vehicle side described in embodiments in FIG. 3. In embodiments in FIG. 3, the processing unit 310 may be configured to perform S101, and the sending unit 312 may be configured to perform S102. The data collection apparatus 30 may be further configured to implement the method at the vehicle 1 side described in embodiments in FIG. 7. For brevity of the specification, details are not described herein again.

One or more of the units in embodiments shown in FIG. 9 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field-programmable gate array (field-programmable gate array, FPGA), or an application-specific integrated circuit (application-specific integrated circuit, ASIC).

Refer to FIG. 10. FIG. 10 is a diagram of a structure of a data collection apparatus according to an embodiment of this application. The data collection apparatus 40 includes a processing unit 410 and a receiving unit 412. The data collection apparatus 40 may be implemented by using hardware, software, or a combination of software and hardware.

The receiving unit 412 is configured to receive first supplementary collection information from a first vehicle, where the first supplementary collection information indicates that map data of a first region needs to be supplementarily collected. The processing unit 410 is configured to adjust a travel path and a speed of a second vehicle and/or control a sensing device on the second vehicle based on the first supplementary collection information.

In some possible embodiments, the data collection apparatus 40 further includes a display unit 414. The display unit 414 is configured to generate a display interface based on the first supplementary collection information.

The data collection apparatus 40 may be configured to implement the method at the second vehicle side described in embodiments in FIG. 3. In embodiments in FIG. 3, the processing unit 410 and the receiving unit 412 may be configured to perform S103, and the display unit 414 may be configured to perform S104. The data collection apparatus 40 may be further configured to implement the method at the vehicle 2 side described in embodiments in FIG. 7 and the method at the target vehicle side described in embodiments in FIG. 8. For brevity of the specification, details are not described herein again.

One or more of the units in embodiments shown in FIG. 10 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field-programmable gate array (field-programmable gate array, FPGA), or an application-specific integrated circuit (application-specific integrated circuit, ASIC).

Refer to FIG. 11. FIG. 11 is a diagram of a structure of a collection indication apparatus according to an embodiment of this application. The collection indication apparatus 50 includes an obtaining unit 510, a processing unit 512, and a sending unit 514. The collection indication apparatus 50 may be implemented by using hardware, software, or a combination of software and hardware.

The obtaining unit 510 is configured to: determine a first region in which map data needs to be supplementarily collected; and obtain vehicle track information, where the vehicle track information includes locations and/or path planning information of a plurality of vehicles. The processing unit 512 is configured to determine a target vehicle from the plurality of vehicles based on a location of the first region and the vehicle track information. The sending unit 514 is configured to send supplementary collection information to the target vehicle, where the supplementary collection information indicates that the map data of the first region needs to be supplementarily collected.

The collection indication apparatus 50 may be configured to implement the method described in embodiments in FIG. 6. In embodiments in FIG. 6, the obtaining unit 510 may be configured to perform S201 and S202, the processing unit 512 may be configured to perform S203, and the sending unit 514 may be configured to perform S204. The collection indication apparatus 50 may be further configured to implement the method at the server side described in embodiments in FIG. 7 and FIG. 8. For brevity of the specification, details are not described herein again.

One or more of the units in embodiments shown in FIG. 11 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field-programmable gate array (field-programmable gate array, FPGA), or an application-specific integrated circuit (application-specific integrated circuit, ASIC).

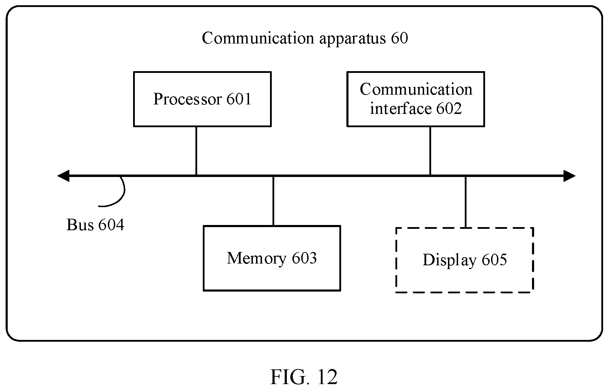

This application further provides a communication apparatus. As shown in FIG. 12, the communication apparatus 60 includes a processor 601, a communication interface 602, a memory 603, and a bus 604. The processor 601, the memory 603, and the communication interface 602 communicate with each other through the bus 604. It should be understood that a quantity of processors and a quantity of memories in the communication apparatus 60 are not limited in this application.

In a specific implementation, the communication apparatus 60 may be a network side device, for example, may be a server (for example, an application server or a map server) deployed at a network side, or may be a component or a chip in the server. The network side device may be deployed in a cloud environment, that is, may be a cloud computing server, or the network side device may be deployed in an edge environment, that is, may be an edge computing server. The network side device may be an integrated device, or may be a plurality of distributed devices. This is not specifically limited in embodiments of this application.

In another specific implementation, the communication apparatus 60 may be a vehicle, or may be an apparatus, a component, or a chip in a vehicle, for example, an on board unit (On Board Unit, OBU). This is not specifically limited in embodiments of this application.

The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 12. However, this does not indicate that there is only one bus or only one type of bus. The bus 604 may include a path for information transmission between various components (for example, the memory 603, the processor 601, and the communication interface 602) of the communication apparatus 60.

The processor 601 may include any one or more of processors such as a central processing unit (central processing unit, CPU), a microprocessor (microprocessor, MP), or a digital signal processor (digital signal processor, DSP).

The memory 603 is configured to provide storage space, and the storage space may store data such as an operating system and a computer program. The memory 603 may be one or a combination of a random access memory (random access memory, RAM), an erasable programmable read only memory (erasable programmable read only memory, EPROM), a read-only memory (read-only memory, ROM), a compact disc read-only memory (compact disc read-only memory, CD-ROM), or the like. The memory 603 may exist independently, or may be integrated into the processor 601.

The communication interface 602 may be configured to provide information input or output for the processor 601. Alternatively, the communication interface 602 may be configured to receive data sent externally and/or send data to the outside, and may be a wired link interface including, for example, an Ethernet cable, or may be a wireless link (for example, Wi-Fi, Bluetooth, or universal wireless transmission) interface. Alternatively, the communication interface 602 may further include a transmitter (for example, a radio frequency transmitter or an antenna), a receiver, or the like coupled to the interface.

In some possible embodiments, when the communication apparatus 60 is a vehicle, the communication apparatus 60 further includes a display 605, and the display 605 is connected to or coupled to the processor 601 through the bus 604. The display 605 is configured to generate a display interface based on first supplementary collection information. The display 605 may be a display screen, and the display screen may be a liquid crystal display (Liquid Crystal Display, LCD), an organic or inorganic light-emitting diode (Organic Light-Emitting Diode, OLED), an active matrix organic light emitting diode panel (Active Matrix Organic Light Emitting Diode, AMOLED), or the like. The display 605 may alternatively be an instrument panel, a vehicle-mounted display, a head up display (head up display, HUD) system, or the like.

The processor 601 in the communication apparatus 60 is configured to read the computer program stored in the memory 603, and is configured to perform the foregoing method, for example, the method described in FIG. 3, FIG. 6, FIG. 7, or FIG. 8.

In a possible design, the communication apparatus 60 may be one or more modules in an execution body for performing the method at the first vehicle side shown in FIG. 3, and the processor 601 may be configured to read one or more computer programs stored in the memory, to perform the following operations:
determining, based on map data collected by a first vehicle, a first region that requires supplementary collection; and
sending first supplementary collection information through a sending unit 312, where the first supplementary collection information indicates that map data of a first region needs to be supplementarily collected.

In a possible design, the communication apparatus 60 may be one or more modules in an execution body for performing the method at the second vehicle side shown in FIG. 3, and the processor 601 may be configured to read one or more computer programs stored in the memory, to perform the following operations:
receiving first supplementary collection information from a first vehicle through a receiving unit 412, where the first supplementary collection information indicates that map data of a first region needs to be supplementarily collected; and
adjusting a travel path and a speed of a second vehicle and/or controlling a sensing device on the second vehicle based on the first supplementary collection information.

In a possible design, the communication apparatus 60 may be one or more modules in an execution body for performing the method shown in FIG. 6, and the processor 601 may be configured to read one or more computer programs stored in the memory, to perform the following operations:
determining, through an obtaining unit 510, a first region in which map data needs to be supplementarily collected; and obtaining vehicle track information, where the vehicle track information includes locations and/or path planning information of a plurality of vehicles;
determining a target vehicle from the plurality of vehicles based on a location of the first region and the vehicle track information; and
sending supplementary collection information to the target vehicle through a sending unit 514, where the supplementary collection information indicates that the map data of the first region needs to be supplementarily collected.

An embodiment of this application further provides a communication system. The communication system includes a first apparatus and a second apparatus. The first apparatus may be, for example, the data collection apparatus 30 shown in FIG. 9, and the second apparatus may be, for example, the data collection apparatus 40 shown in FIG. 10 and/or the collection indication apparatus shown in FIG. 11. The first apparatus may be configured to perform the method at the first vehicle side shown in embodiments in FIG. 3. The second apparatus may be configured to perform, for example, the method at the second vehicle side in embodiments in FIG. 3. The second apparatus may alternatively be configured to indicate the method shown in FIG. 6. In some possible embodiments, the communication system may be further configured to perform the method shown in FIG. 7 or FIG. 8.

In the foregoing embodiments in this specification, the descriptions of each embodiment have respective focuses. For a part that is not described in detail in an embodiment, refer to related descriptions in another embodiment.

It should be noted that a person of ordinary skill in the art may see that, all or a part of the steps in each method of the foregoing embodiments may be implemented by a program instructing related hardware. The program may be stored in a computer-readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read-Only Memory, EPROM), a one-time programmable read-only memory (One-time Programmable Read-Only Memory, OTPROM), an electrically-erasable programmable read-only memory, (Electrically-Erasable Programmable Read-Only Memory, EEPROM), a compact disc read-only memory (Compact Disc Read-Only Memory, CD-ROM), or another optical disk memory, magnetic disk memory, magnetic tape memory, or any other computer-readable medium that can be configured to carry or store data.

The technical solutions of this application essentially, or the part contributing to the conventional technology, or all or some of the technical solutions may be implemented in a form of a software product. The computer program product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. A data collection method, applied to a first vehicle, wherein the method comprises:
determining, based on map data collected by the first vehicle, a first region that requires supplementary collection; and
sending first supplementary collection information, wherein the first supplementary collection information indicates that map data of the first region needs to be supplementarily collected.

2. The method according to claim 1, wherein the sending first supplementary collection information comprises:
broadcasting the first supplementary collection information or sending the first supplementary collection information to a second vehicle, wherein the second vehicle meets at least one of the following conditions:
a distance between the second vehicle and the first region is less than a distance threshold;
a planned path of the second vehicle passes through the first region; and
time at which the second vehicle arrives at the first region meets a time condition.

3. The method according to claim 1 or 2, wherein the method further comprises:
receiving second supplementary collection information sent by another vehicle, wherein the second supplementary collection information indicates that map data of a second region needs to be supplementarily collected; and
collecting map data based on the second supplementary collection information.

4. The method according to any one of claims 1 to 3, wherein the first supplementary collection information comprises at least one of the following content:
information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

5. The method according to any one of claims 1 to 4, wherein the method further comprises: performing at least one of the following operations on a display interface:
marking a region on which the first vehicle has performed collection;
marking the first region that requires supplementary collection; and
marking, by using different colors, the region on which the first vehicle has performed collection and the first region.

6. A data collection method, applied to a second vehicle, wherein the method comprises:
receiving first supplementary collection information from a first vehicle, wherein the first supplementary collection information indicates that map data of a first region needs to be supplementarily collected; and
adjusting a travel path and a speed of the second vehicle and/or controlling a sensing device on the second vehicle based on the first supplementary collection information.

7. The method according to claim 6, wherein an adjusted travel path of the second vehicle passes through the first region.

8. The method according to claim 6 or 7, wherein the first supplementary collection information comprises information indicating time for performing the supplementary collection, and the adjusting a travel path and a speed of the second vehicle and/or controlling a sensing device on the second vehicle based on the first supplementary collection information comprises:
adjusting the travel path and the speed of the second vehicle and/or controlling the sensing device on the second vehicle based on the time information and a location of the first region.

9. The method according to any one of claims 6 to 8, wherein the controlling the sensing device on the second vehicle comprises at least one of the following content:
turning on a first sensing device on the second vehicle;
turning off the first sensing device on the second vehicle; and
adjusting a configuration parameter of the first sensing device on the second vehicle.

10. The method according to claim 9, wherein
the turning on a first sensing device on the second vehicle comprises: turning on the first sensing device at preset time and/or when the second vehicle arrives at a preset location; and
the turning off the first sensing device on the second vehicle comprises: turning off the first sensing device at preset time and/or when the second vehicle arrives at a preset location.

11. The method according to any one of claims 6 to 10, wherein the method further comprises:
sending feedback information to the first vehicle or a server, wherein the feedback information indicates that the second vehicle supplementarily collects the map data in the first region.

12. The method according to claim 11, wherein the feedback information further indicates at least one of the following content:
a region that is in the first region and on which the second vehicle has performed collection;
a region that is in the first region and on which the second vehicle has not performed collection;
a map element that has been collected by the second vehicle in the first region; and
a map element that has not been collected by the second vehicle in the first region.

13. The method according to any one of claims 6 to 12, wherein the first supplementary collection information comprises at least one of the following content:
information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

14. The method according to any one of claims 6 to 13, wherein the method further comprises:
sending second supplementary collection information, wherein the second supplementary collection information indicates that map data of a second region needs to be supplementarily collected.

15. The method according to any one of claims 6 to 14, wherein the method further comprises:
performing at least one of the following operations on a display interface:
marking, on a map, a supplementary collection path used by the second vehicle to perform the supplementary collection;
displaying prompt information on the map, wherein the prompt information is used to inform a user of a travel cost difference between the supplementary collection path and a pre-generated navigation path;
marking at least a partial region selected by the user in the first region;
marking a region that is in the first region and on which the second vehicle has performed collection; and
displaying information used to inform the user that the second vehicle needs to adjust or has adjusted a sensing device because the second vehicle performs the supplementary collection.

16. A data collection method, applied to a server, wherein the method comprises:
determining a first region in which map data needs to be supplementarily collected;
obtaining vehicle track information, wherein the vehicle track information comprises locations and/or path planning information of a plurality of vehicles;
determining a target vehicle from the plurality of vehicles based on a location of the first region and the vehicle track information; and
sending supplementary collection information to the target vehicle, wherein the supplementary collection information indicates that the map data of the first region needs to be supplementarily collected.

17. The method according to claim 16, wherein the determining a first region in which map data needs to be supplementarily collected comprises:
receiving the supplementary collection information from a first vehicle, wherein the supplementary collection information indicates that the map data of the first region needs to be supplementarily collected; and
determining, based on the supplementary collection information, the first region in which the map data needs to be supplementarily collected.

18. The method according to claim 17, wherein the supplementary collection information comprises at least one of the following content:
information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of the target vehicle, motion status information of the first vehicle, and identification information of the first vehicle.

19. The method according to any one of claims 16 to 18, wherein the determining a target vehicle from the plurality of vehicles based on a location of the first region and the vehicle track information comprises:
determining the target vehicle from the plurality of vehicles based on the location of the first region, the vehicle track information, and reference information, wherein the reference information comprises at least one of the following content:
collection precision information of the vehicles, operation cost information of the vehicles, historical participation degrees of the vehicles, vehicle model information of the vehicles, configuration information of sensing devices of the vehicles, identification information of the vehicles, identification information of users who use the vehicles, and the information indicating the time for performing the supplementary collection.

20. A data collection apparatus, wherein the apparatus comprises:
a processing unit, configured to determine, based on map data collected by a first vehicle, a first region that requires supplementary collection; and
a sending unit, configured to send first supplementary collection information, wherein the first supplementary collection information indicates that map data of the first region needs to be supplementarily collected.

21. The apparatus according to claim 20, wherein the sending unit is specifically configured to:
broadcast the first supplementary collection information or send the first supplementary collection information to a second vehicle, wherein the second vehicle meets at least one of the following conditions:
a distance between the second vehicle and the first region is less than a distance threshold;
a planned path of the second vehicle passes through the first region; and
time at which the second vehicle arrives at the first region meets a time condition.

22. The apparatus according to claim 20 or 21, wherein the apparatus further comprises:
a receiving unit, configured to receive second supplementary collection information sent by another vehicle, wherein the second supplementary collection information indicates that map data of a second region needs to be supplementarily collected; and
the processing unit is further configured to collect map data based on the second supplementary collection information.

23. The apparatus according to any one of claims 20 to 22, wherein the first supplementary collection information comprises at least one of the following content:
information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

24. The apparatus according to any one of claims 20 to 23, wherein the apparatus further comprises a display unit, configured to perform at least one of the following operations:
marking a region on which the first vehicle has performed collection;
marking the first region that requires supplementary collection; and
marking, by using different colors, the region on which the first vehicle has performed collection and the first region.

25. A data collection apparatus, wherein the apparatus comprises:
a receiving unit, configured to receive first supplementary collection information from a first vehicle, wherein the first supplementary collection information indicates that map data of a first region needs to be supplementarily collected; and
a processing unit, configured to adjust a travel path and a speed of a second vehicle and/or control a sensing device on the second vehicle based on the first supplementary collection information.

26. The apparatus according to claim 25, wherein an adjusted travel path of the second vehicle passes through the first region.

27. The apparatus according to claim 25 or 26, wherein the first supplementary collection information comprises information indicating time for performing the supplementary collection, and the processing unit is specifically configured to:
adjust the travel path and the speed of the second vehicle and/or control the sensing device on the second vehicle based on the time information and a location of the first region.

28. The apparatus according to any one of claims 25 to 27, wherein the processing unit is specifically configured to:
turn on a first sensing device on the second vehicle;
turn off the first sensing device on the second vehicle; and
adjust a configuration parameter of the first sensing device on the second vehicle.

29. The apparatus according to claim 28, wherein the processing unit comprises a first processing unit and a second processing unit, wherein
the first processing unit is configured to turn on the first sensing device at preset time and/or when the second vehicle arrives at a preset location; and
the second processing unit is further configured to turn off the first sensing device at preset time and/or when the second vehicle arrives at a preset location.

30. The apparatus according to any one of claims 25 to 29, wherein the apparatus further comprises:
a sending unit, configured to send feedback information to the first vehicle or a server, wherein the feedback information indicates that the second vehicle supplementarily collects the map data in the first region.

31. The apparatus according to claim 30, wherein the feedback information further indicates at least one of the following content:
a region that is in the first region and on which the second vehicle has performed collection;
a region that is in the first region and on which the second vehicle has not performed collection;
a map element that has been collected by the second vehicle in the first region; and
a map element that has not been collected by the second vehicle in the first region.

32. The apparatus according to any one of claims 25 to 31, wherein the first supplementary collection information comprises at least one of the following content:
information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of a target vehicle, motion status information of the first vehicle, and identification information of the first vehicle.

33. The apparatus according to any one of claims 25 to 32, wherein the sending unit is further configured to:
send second supplementary collection information, wherein the second supplementary collection information indicates that map data of a second region needs to be supplementarily collected.

34. The apparatus according to any one of claims 25 to 33, wherein the apparatus further comprises a display unit, configured to perform at least one of the following operations:
marking, on a map, a supplementary collection path used by the second vehicle to perform the supplementary collection;
displaying prompt information on the map, wherein the prompt information is used to inform a user of a travel cost difference between the supplementary collection path and a pre-generated navigation path;
marking at least a partial region selected by the user in the first region;
marking a region that is in the first region and on which the second vehicle has performed collection; and
displaying information used to inform the user that the second vehicle needs to adjust or has adjusted a sensing device because the second vehicle performs the supplementary collection.

35. A collection indication apparatus, wherein the apparatus comprises:
an obtaining unit, configured to determine a first region in which map data needs to be supplementarily collected, wherein
the obtaining unit is further configured to obtain vehicle track information, wherein the vehicle track information comprises locations and/or path planning information of a plurality of vehicles;
a processing unit, configured to determine a target vehicle from the plurality of vehicles based on a location of the first region and the vehicle track information; and
a sending unit, configured to send supplementary collection information to the target vehicle, wherein the supplementary collection information indicates that the map data of the first region needs to be supplementarily collected.

36. The apparatus according to claim 35, wherein the obtaining unit is specifically configured to:
receive the supplementary collection information from a first vehicle, wherein the supplementary collection information indicates that the map data of the first region needs to be supplementarily collected; and
determine, based on the supplementary collection information, the first region in which the map data needs to be supplementarily collected.

37. The apparatus according to claim 36, wherein the supplementary collection information comprises at least one of the following content:
information indicating a geographical range of the first region, identification information of a lane in the first region, identification information of a road in the first region, type information of a sensing device configured to supplementarily collect map data in the first region, configuration information of the sensing device configured to supplementarily collect the map data in the first region, type information of the to-be-supplementarily-collected map data in the first region, information indicating a to-be-collected map element in the first region, information indicating time for performing the supplementary collection, information about a reason why the map data in the first region needs to be supplementarily collected, identification information of the target vehicle, motion status information of the first vehicle, and identification information of the first vehicle.

38. The apparatus according to any one of claims 35 to 37, wherein the processing unit is specifically configured to:
determine the target vehicle from the plurality of vehicles based on the location of the first region, the vehicle track information, and reference information, wherein the reference information comprises at least one of the following content:
collection precision information of the vehicles, operation cost information of the vehicles, historical participation degrees of the vehicles, vehicle model information of the vehicles, configuration information of sensing devices of the vehicles, identification information of the vehicles, identification information of users who use the vehicles, and the information indicating the time for performing the supplementary collection.

39. A data collection apparatus, wherein the data collection apparatus comprises a memory and a processor, the memory stores computer program instructions, and the processor runs the computer program instructions to enable the data collection apparatus to perform the method according to any one of claims 1 to 5 or claims 6 to 15.

40. A collection indication apparatus, wherein the collection indication apparatus comprises a memory and a processor, the memory stores computer program instructions, and the processor runs the computer program instructions to enable the collection indication apparatus to perform the method according to any one of claims 16 to 19.

41. A vehicle, wherein the vehicle comprises the apparatus according to any one of claims 20 to 34 or claim 39.

42. A computer-readable storage medium, wherein the computer-readable storage medium stores program instructions, and the program instructions are used to implement the method according to any one of claims 1 to 5, claims 6 to 15, or claims 16 to 19.

43. A computer program product, comprising computer instructions, wherein when the computer instructions are run on a processor, the method according to any one of claims 1 to 5, claims 6 to 15, or claims 16 to 19 is implemented.

44. A data collection system, wherein the system comprises a first apparatus and a second apparatus, or comprises a first apparatus and a third apparatus, the first apparatus is configured to perform the method according to any one of claims 1 to 5, the second apparatus is configured to perform the method according to any one of claims 6 to 15, and the third apparatus is configured to perform the method according to any one of claims 16 to 19.
